(19) Europäisches Patentamt
European Patent Office
Office européen des brevets

(11) EP 3 872 205 A1

(12) EUROPEAN PATENT APPLICATION
published in accordance with Art. 153(4) EPC

(43) Date of publication:
01.09.2021 Bulletin 2021/35

(21) Application number: 19915622.5

(22) Date of filing: 19.02.2019

(51) Int Cl.:
C22C 38/00 (2006.01)    C22C 38/58 (2006.01)
C21D 9/08 (2006.01)     C21D 1/18 (2006.01)
C21D 6/00 (2006.01)     C21D 8/02 (2006.01)
C21D 8/10 (2006.01)     C21D 9/46 (2006.01)
C22C 38/02 (2006.01)    C22C 38/04 (2006.01)
B23K 9/025 (2006.01)    B23K 11/00 (2006.01)
B23K 11/06 (2006.01)    C21D 9/50 (2006.01)
B21C 37/06 (2006.01)    B23K 101/10 (2006.01)
B23K 103/04 (2006.01)

(86) International application number:
PCT/JP2019/006104

(87) International publication number:
WO 2020/170333 (27.08.2020 Gazette 2020/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NIPPON STEEL CORPORATION
Chiyoda-ku
Tokyo 100-8071 (JP)

(72) Inventors:
• HARA, Takuya
Tokyo 100-8071 (JP)

• SAKAMOTO, Shinya
Tokyo 100-8071 (JP)
• IWAMOTO, Shuji
Tokyo 100-8071 (JP)
• KOBAYASHI, Shunichi
Tokyo 100-8071 (JP)
• AMANO, Toshihiko
Tokyo 100-8071 (JP)
• TASHIMA, Kenzo
Tokyo 100-8071 (JP)
• NAGAI, Kensuke
Tokyo 100-8071 (JP)

(74) Representative: Vossius & Partner
Patentanwälte Rechtsanwälte mbB
Siebertstraße 3
81675 München (DE)

(54) ELECTRIC-RESISTANCE-WELDED STEEL PIPE FOR LINE PIPE

(57) An electric resistance welded steel pipe for a linepipe, the steel pipe having a chemical composition including, in terms of % by mass, 0.04 to 0.12% of C, 0.01 to 0.50% of Si, 0.5 to 2.0% of Mn, 0.005 to 0.030% of Ti, 0.005 to 0.050% of Nb, 0.001 to 0.008% of N, and a balance including of Fe and impurities; wherein, in the steel pipe, in a case in which a thickness of the base metal portion is defined as $t_B$, and a thickness of the electric resistance welded portion is defined as ts, a value obtained by subtracting a hardness of the $1/2t_B$ portion from a hardness of the outer surface layer portion B is 30 HV10 or less and a value obtained by subtracting a hardness of the $1/2t_S$ portion from a hardness of the outer surface layer portion S is from 0 HV10 to 30 HV10, and each of the $t_B$ and the ts is 15 mm or more.

**Description**

Technical Field

The present disclosure relates to an electric resistance welded steel pipe for a linepipe.

Background Art

The importance of pipelines is increasing more than ever, in recent years, as a method for long-range transport of crude oil and natural gas. Linepipes used for such pipelines are currently designed based on the American Petroleum Institute (API) Standards.

In particular, linepipes used in cold regions are required to have not only strength but also an excellent low temperature toughness.

Conventionally, UOE steel pipes have been commonly used in such applications, but the application of more inexpensive electric resistance welded steel pipes is required.

For example, each of Patent Documents 1 and 2 discloses, as a material for a high-strength electric resistance welded steel pipe having a strength of API-5L-X56 grade or higher, a high-strength hot-rolled steel sheet which has a specific chemical composition, which has a metallographic microstructure composed of bainitic ferrite and/or ferrite, and which has a sheet thickness of 18 mm or more. Each of these Patent Documents 1 and 2 also discloses an electric resistance welded steel pipe which is obtained by forming the above described high-strength hot-rolled steel sheet into a roughly cylindrical shape to prepare an open pipe, and subjecting the ends of the thus prepared open pipe to electric resistance welding, and in which the resulting electric resistance welded portion has a hardness after seam annealing, as calculated by {(average hardness of electric resistance welded portion) - (base metal hardness)}, of 30 HV or less.

Patent Document 1: Japanese Patent Application Laid-Open (JP-A) No. 2007-138289
Patent Document 2: JP-A No. 2007-138290

SUMMARY OF INVENTION

Technical Problem

Studies by the present inventors have revealed that, in the case of an electric resistance welded steel pipe having a large thickness (particularly, in the case of having a thickness of 15 mm or more), variations in hardness in a thickness direction of the electric resistance welded steel pipe are more likely to occur, particularly in the electric resistance welded portion of the electric resistance welded steel pipe, and this may result in a decrease in the low temperature toughness of the electric resistance welded portion.

Patent Documents 1 and 2 are silent about controlling the above described variations in hardness in the thickness direction, in the electric resistance welded portion. Therefore, it cannot be said that the electric resistance welded steel pipes of Patent Document 1 and 2 necessarily have a sufficient low temperature toughness of the electric resistance welded portions.

Further, in Patent Documents 1 and 2, toughness is evaluated by a Charpy impact test. However, in order to ensure reliability for use in cold regions, it is essential to evaluate the low temperature toughness of the electric resistance welded portion by a CTOD (Crack tip opening displacement) test, not by a Charpy impact test.

An object of the present disclosure is to provide an electric resistance welded steel pipe which has a tensile strength of from 500 MPa to 700 MPa, and whose base metal portion and electric resistance welded portion have an excellent low temperature toughness.

Solution to Problem

Means for solving the problem described above includes the following aspects.

<1> An electric resistance welded steel pipe for a linepipe, the steel pipe comprising:

a base metal portion and an electric resistance welded portion,
wherein the base metal portion has a chemical composition consisting of, in terms of % by mass:

from 0.04 to 0.12% of C,

from 0.01 to 0.50% of Si,
from 0.5 to 2.0% of Mn,
from 0 to 0.020% of P,
from 0 to 0.0030% of S,
from 0 to 0.080% of Al,
from 0.005 to 0.030% of Ti,
from 0.005 to 0.050% of Nb,
from 0.001 to 0.008% of N,
from 0 to 0.003% of O,
from 0 to 0.5% of Cu,
from 0 to 0.5% of Ni,
from 0 to 0.50% of Cr,
from 0 to 0.5% of Mo,
from 0 to 0.10% of V,
from 0 to 0.0020% of B,
from 0 to 0.500% of W,
from 0 to 0.0500% of Zr,
from 0 to 0.0500% of Ta,
from 0 to 0.005% of Mg,
from 0 to 0.0050% of Ca,
from 0 to 0.0050% of REM,
from 0 to 0.0050% of Y,
from 0 to 0.0050% of Hf,
from 0 to 0.0050% of Re, and
a balance consisting of Fe and impurities,
wherein Ceq, represented by the following Formula (i), is from 0.20 to 0.53, and Pcm, represented by the following Formula (ii), is from 0.150 to 0.250:

$$Ceq = C + Mn/6 + (Ni + Cu)/15 + (Cr + Mo + V)/5 \qquad (i)$$

$$Pcm = C + Si/30 + (Mn + Cu + Cr)/20 + Ni/60 + Mo/15 + V/10 + 5 \times B \qquad (ii)$$

wherein, in Formulae (i) and (ii), each element symbol represents a content of each element in % by mass;

wherein, in a case in which a thickness of the base metal portion is defined as $t_B$, and a thickness of the electric resistance welded portion is defined as ts,

a metallographic microstructure of each of an outer surface layer portion B that is located at a position at a depth of 1 mm from an outer surface of the base metal portion, a $1/4t_B$ portion that is located at a position at a depth of $1/4t_B$ from the outer surface of the base metal portion, and a $1/2t_B$ portion that is located at a position at a depth of $1/2t_B$ from the outer surface of the base metal portion, has a polygonal ferrite fraction of from 0 to 50%, and an average crystal grain size in the outer surface layer portion B, the $1/4t_B$ portion and the $1/2t_B$ portion is 20 $\mu$m or less;
a value obtained by subtracting a hardness of the $1/2t_B$ portion from a hardness of the outer surface layer portion B is from 0 HV10 to 30 HV10;
a metallographic microstructure of an outer surface layer portion S that is located at a position at a depth of 1 mm from an outer surface of the electric resistance welded portion has a polygonal ferrite fraction of from 0 to 30%, and an average crystal grain size in the outer surface layer portion S is 20 $\mu$m or less;
a metallographic microstructure of a $1/4t_S$ portion that is located at a position at a depth of $1/4t_S$ from the outer surface of the electric resistance welded portion has a polygonal ferrite fraction of from 0 to 40%, and an average crystal grain size in the $1/4t_S$ portion is 20 $\mu$m or less;
a metallographic microstructure of a $1/2t_S$ portion that is located at a position at a depth of $1/2t_S$ from the outer surface of the electric resistance welded portion has a polygonal ferrite fraction of from 0 to 50%, and an average crystal grain size in the $1/2t_S$ portion is 20 $\mu$m or less;
a value obtained by subtracting a hardness of the $1/2t_S$ portion from a hardness of the outer surface layer portion S is from 0 HV10 to 30 HV10; and

each of the $t_B$ and the $t_S$ is 15 mm or more;

wherein the electric resistance welded steel pipe has a tensile strength of from 500 MPa to 700 MPa; and
wherein the electric resistance welded steel pipe has a yield strength of from 410 MPa to 560 MPa.

<2> The electric resistance welded steel pipe for a linepipe according to <1>, wherein the chemical composition of the base metal portion comprises, in terms of % by mass, at least one selected from the group consisting of:

more than 0% but equal to or less than 0.5% of Cu,
more than 0% but equal to or less than 0.5% of Ni,
more than 0% but equal to or less than 0.50% of Cr,
more than 0% but equal to or less than 0.5% of Mo,
more than 0% but equal to or less than 0.10% of V,
more than 0% but equal to or less than 0.002% of B,
more than 0% but equal to or less than 0.500% of W,
more than 0% but equal to or less than 0.0500% of Zr,
more than 0% but equal to or less than 0.0500% of Ta,
more than 0% but equal to or less than 0.005% of Mg,
more than 0% but equal to or less than 0.0050% of Ca,
more than 0% but equal to or less than 0.0050% of REM,
more than 0% but equal to or less than 0.0050% of Y,
more than 0% but equal to or less than 0.0050% of Hf, and
more than 0% but equal to or less than 0.0050% of Re.

<3> The electric resistance welded steel pipe for a linepipe according to <1> or <2>, wherein each of the $t_B$ and the $t_S$ is from 15 mm to 30 mm.
<4> The electric resistance welded steel pipe for a linepipe according to any one of <1> to <3>, wherein the electric resistance welded steel pipe has an outer diameter of from 304.8 mm to 609.6 mm.

Advantageous Effects of Invention

The present disclosure provides an electric resistance welded steel pipe which has a tensile strength of from 500 MPa to 700 MPa, and whose base metal portion and electric resistance welded portion have an excellent low temperature toughness.

BRIEF DESCRIPTION OF DRAWINGS

FIG. 1 is a schematic front view of a tensile test specimen in the present disclosure.
FIG. 2 is a schematic front view of a DWTT test specimen in the present disclosure.

DESCRIPTION OF EMBODIMENTS

A numerical range expressed by "x to y" herein includes the values of x and y in the range as the minimum and maximum values, respectively.
The content of a component (element) expressed by "%" herein means "% by mass".
The content of C (carbon) may be herein occasionally expressed as "C content". The content of another element may be expressed similarly.
The term "step" herein encompasses not only an independent step but also a step of which the desired object is achieved even in a case in which the step is incapable of being definitely distinguished from another step.
An electric resistance welded steel pipe for a linepipe according to the present disclosure (hereinafter, also simply referred to as "electric resistance welded steel pipe") includes a base metal portion and an electric resistance welded portion,

wherein the base metal portion has a chemical composition including, in terms of % by mass: from 0.04 to 0.12% of C, from 0.01 to 0.50% of Si, from 0.5 to 2.0% of Mn, from 0 to 0.020% of P, from 0 to 0.0030% of S, from 0 to 0.080% of Al, from 0.005 to 0.030% of Ti, from 0.005 to 0.050% of Nb, from 0.001 to 0.008% of N, from 0 to 0.003% of O, from 0 to 0.5% of Cu, from 0 to 0.5% of Ni, from 0 to 0.50% of Cr, from 0 to 0.5% of Mo, from 0 to 0.10% of V, from 0 to 0.0020% of B, from 0 to 0.500% of W, from 0 to 0.0500% of Zr, from 0 to 0.0500% of Ta, from 0 to 0.005% of Mg, from 0 to 0.0050% of Ca, from 0 to 0.0050% of REM, from 0 to 0.0050% of Y, from 0 to 0.0050% of Hf, and from 0 to 0.0050% of Re, and a balance consisting of Fe and impurities,

wherein, Ceq, represented by the following Formula (i), is from 0.20 to 0.53, and Pcm, represented by the following Formula (ii), is from 0.150 to 0.250,

wherein, in a case in which a thickness of the base metal portion is defined as $t_B$, and a thickness of the electric resistance welded portion is defined as ts,

a metallographic microstructure of each of an outer surface layer portion B that is located at a position at a depth of 1 mm from an outer surface of the base metal portion, a $1/4t_B$ portion that is located at a position at a depth of $1/4t_B$ from the outer surface of the base metal portion, and a $1/2t_B$ portion that is located at a position at a depth of $1/2t_B$ from the outer surface of the base metal portion, has a polygonal ferrite fraction of from 0 to 50%, and an average crystal grain size in the outer surface layer portion B, the $1/4t_B$ portion and the $1/2t_B$ portion is 20 $\mu$m or less;

a value obtained by subtracting a hardness of the $1/2t_B$ portion from a hardness of the outer surface layer portion B is from 0 HV10 to 30 HV10;

a metallographic microstructure of an outer surface layer portion S that is located at a position at a depth of 1 mm from an outer surface of the electric resistance welded portion has a polygonal ferrite fraction of from 0 to 30%, and an average crystal grain size in the outer surface layer portion S is 20 $\mu$m or less;

a metallographic microstructure of a $1/4t_S$ portion that is located at a position at a depth of $1/4t_S$ from the outer surface of the electric resistance welded portion has a polygonal ferrite fraction of from 0 to 40%, and an average crystal grain size in the $1/4t_S$ portion is 20 $\mu$m or less;

a metallographic microstructure of a $1/2t_S$ portion that is located at a position at a depth of $1/2t_S$ from the outer surface of the electric resistance welded portion has a polygonal ferrite fraction of from 0 to 50%, and an average crystal grain size in the $1/2t_S$ portion is 20 $\mu$m or less;

a value obtained by subtracting a hardness of the $1/2t_S$ portion from a hardness of the outer surface layer portion S is from 0 HV10 to 30 HV10; and

each of the $t_B$ and the $t_S$ is 15 mm or more;

wherein the electric resistance welded steel pipe has a tensile strength of from 500 MPa to 700 MPa; and
wherein the electric resistance welded steel pipe has a yield strength of from 410 MPa to 560 MPa.

$$Ceq = C + Mn/6 + (Ni + Cu)/15 + (Cr + Mo + V)/5 \qquad (i)$$

$$Pcm = C + Si/30 + (Mn + Cu + Cr)/20 + Ni/60 + Mo/15 + V/10 + 5 \times B$$

$$(ii)$$

In Formulae (i) and (ii), each element symbol represents the content of each element in % by mass.

The electric resistance welded steel pipe according to the present disclosure has a tensile strength of from 500 MPa to 700 MPa, and the base metal portion and the electric resistance welded portion of the pipe have an excellent low temperature toughness.

Hereinafter, the above described chemical composition of the base metal portion (including that the value of Ceq is from 0.20 to 0.53, and that the value of Pcm is from 0.150 to 0.250) is sometimes referred to as "chemical composition in the present disclosure".

Studies by the present inventors have revealed that, in a case in which an electric resistance welded steel pipe whose base metal portion has the chemical composition in the present disclosure, has a large thickness (particularly, in the case of having a thickness of 15 mm or more), variations in hardness in the thickness direction of the electric resistance welded steel pipe are more likely to occur, particularly in the electric resistance welded portion, and this may result in a decrease in the low temperature toughness of the electric resistance welded steel pipe.

Specifically, the above described variations in hardness in the thickness direction are thought to occur in the following manner.

In general, an electric resistance welded steel pipe is produced by roll forming a hot-rolled steel sheet to prepare an open pipe, and subjecting the abutting portion in the thus prepared open pipe to electric resistance welding to form an electric resistance welded portion. In this method of producing an electric resistance welded steel pipe, there is a case in which a heat treatment (hereinafter, also referred to as a "seam heat treatment") is performed on the electric resistance welded portion formed by electric resistance welding. The seam heat treatment is sometimes carried out by performing heating and cooling in this order, from the outer surface side of the electric resistance welded steel pipe. In this case, and when the electric resistance welded steel pipe has a large thickness (particularly, in the case of having a thickness of 15 mm or more), it may result in too high a cooling rate in the vicinity of the outer surface (for example, at the outer surface layer portion S) as compared to the cooling rate at a central portion in the thickness direction (namely, the $1/2t_S$ portion), in the electric resistance welded portion. As a result, the hardness in the vicinity of the outer surface (for example, the outer surface layer portion S) may be too high as compared to the hardness of at the central portion in the thickness direction (namely, the $1/2t_S$ portion), in the electric resistance welded portion (see, for example, No. 36 (Comparative Example), No. 37 (Comparative Example) and No. 40 (Comparative Example) to be described later).

In the electric resistance welded steel pipe according to the present disclosure, however, the value obtained by subtracting the hardness of the $1/2t_S$ portion from the hardness of the outer surface layer portion S, in the electric resistance welded portion, is controlled within the range of from 0 HV10 to 30 HV10.

As a result, while being an electric resistance welded steel pipe having a thickness (each of $t_B$ and ts) of 15 mm or more, the low temperature toughness of the electric resistance welded portion is improved.

The value obtained by subtracting the hardness of the $1/2t_S$ portion from the hardness of the outer surface layer portion S that has been adjusted within the range of from 0 HV10 to 30 HV10, can be achieved by strictly controlling conditions of the seam heat treatment (namely, heating conditions and/or cooling conditions) to be performed on the electric resistance welded portion, and whereby controlling such that the difference between the cooling rate at the outer surface layer portion S and the cooling rate at the $1/2t_S$ portion is not excessively increased.

In contrast to the electric resistance welded steel pipe according to the present disclosure, not much difference occurs in the hardness in the thickness direction in an electric resistance welded steel pipe having a thickness of less than 15 mm (see, for example, No. 44 (Reference Example) to be described later). The reason for this is because, due to having a small thickness, the difference between the cooling rate at the outer surface layer portion S and the cooling rate at the $1/2t_S$ portion is not significantly increased.

In the electric resistance welded steel pipe according to the present disclosure, the value obtained by subtracting the hardness of the $1/2t_B$ portion from the hardness of the outer surface layer portion B, in the base metal portion, is also controlled to 30 HV10 or less, in the same manner as the electric resistance welded portion.

This enables to improve the low temperature toughness of the base metal portion, as well, thereby ensuring the low temperature toughness of the electric resistance welded steel pipe as a whole.

In the electric resistance welded steel pipe according to the present disclosure, the term "base metal portion" refers to a portion other than the electric resistance welded portion and a heat affected zone in the electric resistance welded steel pipe.

The term "heat affected zone" (sometimes referred to as "HAZ") refers to a zone which is present in the vicinity of the electric resistance welded portion, and which has been affected by heat due to electric resistance welding and the seam heat treatment.

Further, in the electric resistance welded steel pipe according to the present disclosure, the fact that the average crystal grain size in the outer surface layer portion B, the $1/4t_B$ portion and the $1/2t_B$ portion, the average crystal grain size in the outer surface layer portion S, the average crystal grain size in the $1/4t_S$ portion, and the average crystal grain size in the $1/2t_S$ portion, are each limited to 20 $\mu$m or less, also contributes to an improvement in the low temperature toughness of the base metal portion and the electric resistance welded portion.

In the present disclosure, the low temperature toughness of the base metal portion is evaluated by a DWTT test (Drop weight tear test), and the low temperature toughness of the electric resistance welded portion is evaluated by a CTOD (Crack tip opening displacement) test (see Examples to be described later).

In the electric resistance welded steel pipe according to the present disclosure, the metallographic microstructure of each of the outer surface layer portion B, the $1/4t_B$ portion and the $1/2t_B$ portion, in the base metal portion, has a polygonal ferrite fraction of from 0 to 50%. Such a polygonal ferrite fraction contributes to improving the strength (specifically, achieving a tensile strength of 500 MPa or more) of the electric resistance welded steel pipe.

In the electric resistance welded steel pipe according to the present disclosure, the outer surface layer portion S, the $1/4t_S$ portion and the $1/2t_S$ portion, in the electric resistance welded portion, have polygonal ferrite fractions of from 0 to 30%, from 0 to 40% and from 0 to 50%, respectively.

The fact that the outer surface layer portion S, the $1/4t_S$ portion and the $1/2t_S$ portion have polygonal ferrite fractions of from 0 to 30%, from 0 to 40% and from 0 to 50%, respectively, means that heating and cooling as the seam heat treatment have been performed in this order, on the electric resistance welded portion before being subjected to the seam heat treatment, from the outer surface side thereof.

Specifically, in a case in which the cooling is performed on the electric resistance welded portion to which the heating has been performed from the outer surface side thereof, the cooling rate decreases in the direction from the outer surface side toward the $1/2t_S$ portion, in many cases. In this case, the upper limit of a permissible polygonal ferrite fraction increases in the direction from the outer surface side toward the $1/2t_S$ portion. As a result, the polygonal ferrite fraction as described above is achieved.

< Chemical Composition of Base Metal Portion >

The chemical composition of the base metal portion (namely, the chemical composition in the present disclosure) will now be described.

C: from 0.04 to 0.12%

C is an element which improves the strength of the base metal portion of the steel. The C content is 0.04% or more, from the viewpoint of obtaining such an effect. The C content is preferably 0.045% or more, and more preferably 0.05% or more.

When the C content is more than 0.12%, however, it may cause a decrease in the weldability and the low temperature toughness of the steel. Accordingly, the C content is 0.12% or less. The C content is preferably 0.10% or less.

Si: from 0.01 to 0.50%

Si is an element necessary as a deoxidizing element, in the production of the steel. The Si content is 0.01% or more, from the viewpoint of obtaining such an effect. The Si content is preferably 0.02% or more, more preferably 0.10% or more, and still more preferably 0.20% or more.

When the Si content is more than 0.50%, however, it may cause a decrease in the toughness of the electric resistance welded portion. Accordingly, the Si content is 0.50% or less. The Si content is preferably 0.40% or less.

Mn: from 0.5 to 2.0%

Mn is an element necessary for ensuring the strength and the low temperature toughness of the base metal portion. The Mn content is 0.5% or more, from the viewpoint of obtaining such an effect. The Mn content is preferably 1.0% or more.

When the Mn content is more than 2.0%, however, the toughness of the electric resistance welded portion may be markedly impaired. Accordingly, the Mn content is 2.0% or less. The Mn content is preferably 1.9% or less.

P: from 0 to 0.020%

P is an impurity. The P content may be 0%. The P content may be more than 0%, 0.001% or more, or 0.005% or more, from the viewpoint of reducing dephosphorization cost.

At the same time, P is an element which affects the low temperature toughness of the steel, and when the P content is more than 0.020%, the toughness of the base metal portion and the electric resistance welded portion may be markedly impaired. Accordingly, the P content is 0.020% or less. The P content is preferably 0.017% or less.

S: from 0 to 0.0030%

S is an impurity. The S content may be 0%. The S content may be more than 0%, 0.0001% or more, or 0.0003% or more, from the viewpoint of reducing desulfurization cost.

When the S content is more than 0.0030%, however, it may cause the formation of coarse sulfides, possibly impairing the low temperature toughness. Accordingly, the S content is 0.0030% or less. The S content is preferably 0.0020% or less.

A1: from 0 to 0.080%

A1 is an optional element. Therefore, the A1 content may be 0%, or may be more than 0%.

A1 is an element capable of functioning as a deoxidizing agent. The A1 content may be 0.001% or more, or 0.003% or more, from the viewpoint of allowing such a function to be effectively provided.

When the A1 content is more than 0.080%, however, island-like martensite or a martensite-austenite constituent, which is a structure that causes embrittlement, may be formed, possibly resulting in a decrease in the low temperature toughness. Accordingly, the A1 content is 0.080% or less. The A1 content is preferably 0.050% or less, and more preferably 0.040% or less.

Ti: from 0.005 to 0.030%

Ti is an element which functions as a deoxidizing agent. Further, Ti is an element which has the effect of refining crystal grains, as a nitride-forming element. The Ti content is 0.005% or more, from the viewpoint of obtaining these effects. The Ti content is preferably 0.010% or more.

When the Ti content is more than 0.030%, however, it may cause a marked decrease in the low temperature toughness due to the formation of carbides. Accordingly, the Ti content is 0.030% or less. The Ti content is preferably 0.025% or less.

Nb: from 0.005 to 0.050%

Nb is an element which forms carbides and/or nitrides, and contributes to an improvement in the strength. The Nb content is 0.005% or more, from the viewpoint of obtaining such an effect. The Nb content is preferably 0.010% or more.

When the Nb content is more than 0.050%, however, it may cause a decrease in the low temperature toughness. Accordingly, the Nb content is 0.050% or less. The Nb content is preferably 0.040% or less.

N: from 0.001 to 0.008%

N is an element which affects the low temperature toughness of the steel. When the N content is less than 0.001 %, the amount of pinning particles, such as TiN, may be reduced, possibly resulting in the deterioration of the low temperature toughness. Therefore, the N content is 0.001% or more. The N content is preferably 0.002% or more.

When the N content is more than 0.008%, however, the toughness of the base metal portion and the electric resistance welded portion may be markedly impaired. Accordingly, the N content is 0.008% or less. The N content is preferably 0.006% or less, and more preferably 0.004% or less.

O: from 0 to 0.003%

O is an impurity. The O content may be 0%. The O content may be more than 0%, or 0.001% or more, from the viewpoint of reducing deoxidation cost.

At the same time, O is an element which affects the low temperature toughness of the steel. When the O content is more than 0.003%, the toughness of the base metal portion and the electric resistance welded portion may be markedly impaired. Accordingly, the O content is 0.003% or less. The O content is preferably 0.0025% or less.

Cu: from 0 to 0.5%

Cu is an optional element. In other words, the Cu content may be 0%, or may be more than 0%.

Cu is an element which increases the strength of the steel without decreasing the low temperature toughness thereof. The Cu content may be 0.01% or more, or 0.1% or more, from the viewpoint of obtaining such an effect.

When the Cu content is more than 0.50%, however, there is a case in which cracks are more likely to occur during slab heating and welding. Accordingly, the Cu content is 0.5% or less. The Cu content is preferably 0.45% or less, more preferably 0.4% or less, and still more preferably 0.3% or less.

Ni: from 0 to 0.5%

Ni is an optional element. In other words, the Ni content may be 0%, or may be more than 0%.

Ni is an element effective for improving the low temperature toughness and the strength. The Ni content may be 0.01% or more, 0.1% or more, or 0.2% or more, from the viewpoint of obtaining such an effect.

When the Ni content is more than 0.5%, however, the weldability may decrease. Accordingly, the Ni content is 0.5% or less. The Ni content is preferably 0.4% or less, and more preferably 0.3% or less.

Cr: from 0 to 0.50%

Cr is an optional element. In other words, the Cr content may be 0%, or may be more than 0%.

Cr is an element which improves the strength of the steel by precipitation strengthening. The Cr content may be 0.01% or more, or 0.10% or more.

When the Cr content is more than 0.50%, however, it may cause an excessive hardenability, possibly resulting in a decrease in the low temperature toughness. Accordingly, the Cr content is 0.50% or less. The Cr content is preferably 0.40% or less, and more preferably 0.30% or less.

Mo: from 0 to 0.5%

Mo is an optional element. In other words, the Mo content may be 0%, or may be more than 0%.
Mo is an element which improves the strength, by improving the hardenability and by forming carbonitrides. The Mo content may be 0.01% or more, 0.05% or more, 0.1% or more, or 0.2% or more, from the viewpoint of obtaining such an effect.
When the Mo content is more than 0.5%, however, it may cause an excessive strength, and a marked decrease in the low temperature toughness. Accordingly, the Mo content is 0.5% or less. The Mo content is preferably 0.4% or less, and more preferably 0.3% or less.

V: from 0 to 0.10%

V is an optional element. In other words, the V content may be 0%, or may be more than 0%.
V is an element which forms carbides and/or nitrides, and contributes to an improvement in the strength. The V content may be 0.001% or more, or 0.01% or more, from the viewpoint of obtaining such an effect.
When the V content is more than 0.10%, however, it may cause a decrease in the low temperature toughness. Accordingly, the V content is 0.10% or less. The V content is preferably 0.06% or less.

B: from 0 to 0.0020%

B is an optional element. In other words, the B content may be 0%, or may be more than 0%.
B is an element which improves the hardenability. The B content may be 0.0001% or more, or 0.0003% or more, from the viewpoint of obtaining such an effect.
When the B content is more than 0.0020%, however, precipitates of B may be formed, possibly resulting in the deterioration of the low temperature toughness. Accordingly, the B content is 0.0020% or less. The B content is preferably 0.0015% or less.

W: from 0 to 0.500%

W is an optional element. In other words, the W content may be 0%, or may be more than 0%.
W is an element which improves the strength, by improving the hardenability and by forming carbonitrides. The W content may be 0.001% or more, or 0.010% or more, from the viewpoint of obtaining such an effect.
When the W content is more than 0.500%, however, it may cause an excessive strength, and a marked decrease in the low temperature toughness. Accordingly, the W content is 0.500% or less. The W content is preferably 0.400% or less, and more preferably 0.100% or less.
Zr: from 0 to 0.0500%
Ta: from 0 to 0.0500%
Zr and Ta are each an optional element. In other words, each of the Zr content and the Ta content may be 0%, or may be more than 0%.
Zr and Ta are each an element which forms carbides and/or nitrides, and contributes to an improvement in the strength, in the same manner as Nb. Each of the Zr content and the Ta content may independently be 0.0001% or more, or 0.0010% or more, from the viewpoint of obtaining such an effect.
When each of the Zr content and the Ta content is more than 0.0500%, however, it may cause a decrease in the low temperature toughness. Accordingly, each of the Zr content and the Ta content is 0.0500% or less. It is preferred that each of the Zr content and the Ta content is independently 0.0100% or less.

Mg: from 0 to 0.005%

Mg is an optional element. In other words, the Mg content may be 0%, or may be more than 0%.
Mg is an element which has an effect as a deoxidizing agent. Mg also has the effect of forming pinning particles composed of oxides. The Mg content may be 0.0001% or more, or 0.001% or more.
When the Mg content is more than 0.005%, however, coarse oxides are more likely to be formed, possibly resulting in a decrease in the toughness of the base metal portion and the electric resistance welded portion. Accordingly, the Mg content is 0.005% or less. The Mg content is preferably 0.004% or less.

Ca: from 0 to 0.0050%

Ca is an optional element. In other words, the Ca content may be 0%, or may be more than 0%.

Ca has the effect of reducing the formation of elongated MnS by forming sulfides, and improving the properties of a steel material in a sheet thickness direction, particularly, lamellar tear resistance. The Ca content may be 0.0001% or more, 0.0002% or more, or 0.0010% or more, from the viewpoint of obtaining these effects.

When the Ca content is more than 0.005%, however, the number of Ca oxides in the base metal portion and the electric resistance welded portion will be increased. As a result, Ca oxides may serve as origins of fracture, possibly resulting in a large decrease in the low temperature toughness. Accordingly, the Ca content is 0.0050% or less. The Ca content is preferably 0.0040% or less, and more preferably 0.0030% or less.

REM: from 0 to 0.0050%

Y: from 0 to 0.0050%

Hf: from 0 to 0.0050%

Re: from 0 to 0.0050%

Each of REM, Y, Hf and Re has the effect of reducing the formation of elongated MnS by forming sulfides, and improving the properties of a steel material in the sheet thickness direction, particularly, the lamellar tear resistance, in the same manner as Ca. Each of the REM content, the Y content, the Hf content and the Re content may be 0.0001% or more, or 0.0010% or more, from the viewpoint of obtaining these effects.

When each of the REM content, the Y content, the Hf content and the Re content is more than 0.0050%, however, the numbers of oxides of these elements are increased. As a result, the oxides of these elements may serve as the origins of fracture, possibly resulting in a large decrease in the low temperature toughness. Accordingly, each of the REM content, the Y content, the Hf content and the Re content is 0.0050% or less. It is preferred that each of the REM content, the Y content, the Hf content and the Re content is independently 0.0045% or less, and more preferably 0.0030% or less.

The term "REM" as used herein refers to the total 16 elements including Sc and lanthanoid elements, and the above described REM content refers to the total content of these elements.

Balance: Fe and impurities

In the chemical composition of the base metal portion, the balance excluding the respective elements described above is Fe and impurities.

The term "impurities" as used herein refers to components which are contained in raw materials (such as ores and scraps), or components which are mixed-in during production steps, and are not intentionally incorporated into the steel.

Examples of the impurities include all elements other than the elements described above. Only one kind, or two or more kinds of elements may be contained as the impurities.

Examples of the impurities include Sb, Sn, Co, As, Pb, Bi, and H.

In general, any of Sb, Sn, Co and As can be contained, for example, in a content of 0.1% or less, any of Pb and Bi can be contained, for example, in a content of 0.005% or less, and H can be contained, for example, in a content of 0.0004% or less, as the impurities. The contents of other elements need not be particularly controlled, as long as the contents are within usual ranges.

From the viewpoint of obtaining the above described effects provided by the respective elements, the chemical composition of the base metal portion may include at least one selected from the group consisting of: more than 0% but equal to or less than 0.5% of Cu, more than 0% but equal to or less than 0.5% of Ni, more than 0% but equal to or less than 0.50% of Cr, more than 0% but equal to or less than 0.5% of Mo, more than 0% but equal to or less than 0.10% of V, more than 0% but equal to or less than 0.002% of B, more than 0% but equal to or less than 0.500% of W, more than 0% but equal to or less than 0.0500% of Zr, more than 0% but equal to or less than 0.0500% of Ta, more than 0% but equal to or less than 0.005% of Mg, more than 0% but equal to or less than 0.0050% of Ca, more than 0% but equal to or less than 0.0050% of REM, more than 0% but equal to or less than 0.0050% of Y, more than 0% but equal to or less than 0.0050% of Hf, and more than 0% but equal to or less than 0.0050% of Re.

Preferred ranges of the contents of these elements are each as described above.

Ceq: from 0.20 to 0.53

In the chemical composition of the base metal portion, Ceq represented by the following Formula (i) is from 0.20 to 0.53.

Ceq is a value which serves as an index for hardenability.

$$Ceq = C + Mn/6 + (Ni + Cu)/15 + (Cr + Mo + V)/5 \qquad (i)$$

In Formula (i), each element symbol represents the content of each element in % by mass.

When the value of Ceq is less than 0.20, it may result in a failure to obtain a necessary strength. Therefore, the value of Ceq is 0.20 or more. The value of Ceq is preferably 0.30 or more.

When the value of Ceq is more than 0.53, however, the low temperature toughness may be deteriorated. Therefore, the value of Ceq is 0.53 or less. The value of Ceq is preferably 0.50 or less.

Pcm: from 0.150 to 0.250

In the chemical composition of the base metal portion, Pcm represented by the following Formula (ii) is from 0.150 to 0.250.

$$Pcm = C + Si/30 + (Mn + Cu + Cr)/20 + Ni/60 + Mo/15 + V/10 + 5 \times B$$

$$(ii)$$

In Formula (ii), each element symbol represents the content of each element in % by mass.

Each element on the right side of Formula (ii) has the effect of improving the strength of the steel.

When the value of Pcm is less than 0.150, it may result in a failure to obtain a necessary strength. Therefore, the value of Pcm is 0.150 or more. The value of Pcm is preferably 0.152 or more.

When the value of Pcm is more than 0.250, however, there is a case in which the low temperature toughness of the base metal portion and the electric resistance welded portion may be deteriorated, and in which weld cracking may occur during girth welding of the steel pipe at the time of laying linepipes. Therefore, the value of Pcm is 0.250 or less. The value of Pcm is preferably 0.245 or less.

In order to improve the strength of the electric resistance welded steel pipe, and to improve the low temperature toughness of the base metal portion and the electric resistance welded portion, it is important to control the metallographic microstructures of the base metal portion and the electric resistance welded portion.

The respective metallographic microstructures of the base metal portion and the electric resistance welded portion, in the electric resistance welded steel pipe according to the present disclosure, will now be described.

< Metallographic microstructures of Base Metal Portion (Outer Surface Layer Portion B, 1/4$t_B$ Portion, and 1/2$t_B$ Portion) >

(Polygonal Ferrite Fraction)

The metallographic microstructure of each of the outer surface layer portion B, the 1/4$t_B$ portion and the 1/2$t_B$ portion, in the base metal portion, has a polygonal ferrite fraction of from 0 to 50%. In other words, the polygonal ferrite fraction in the metallographic microstructure of the outer surface layer portion B is from 0 to 50%, the polygonal ferrite fraction in the metallographic microstructure of the 1/4$t_B$ portion is from 0 to 50%, and the polygonal ferrite fraction in the metallographic microstructure of the 1/2$t_B$ portion is from 0 to 50%.

When the polygonal ferrite fraction in each of these metallographic microstructures is more than 50%, there is a risk that the strength of the electric resistance welded steel pipe may decrease.

The polygonal ferrite fraction in each of these metallographic microstructures may be 0%.

The measurement of the polygonal ferrite fraction as above described is performed for each of the outer surface layer portion B, the 1/4$t_B$ portion and the 1/2$t_B$ portion, in an L cross section at a base metal 180° position of the electric resistance welded steel pipe. The term "base metal 180° position" as used herein refers to a position 180 degrees away from the electric resistance welded portion in a pipe circumferential direction.

Further, the term "L cross section" as used herein refers to a cross section parallel to a pipe axis direction and the thickness direction.

The method of measuring the polygonal ferrite fraction will now be described in detail.

Samples for observing the respective measurement positions (namely, the outer surface layer portion B, the 1/4$t_B$ portion, and the 1/2$t_B$ portion) in the L cross section at the base metal 180° position, are each obtained from the electric resistance welded steel pipe.

An observation surface of each of the thus obtained samples is polished for a period of from 30 to 60 minutes, using a colloidal silica abrasive. Each polished observation surface is analyzed using EBSD-OIM (trademark) (Electron Back Scatter Diffraction Pattern-Orientation Image Microscopy). Thereafter, an area ratio of polygonal ferrite within a field of view of 200 μm (in the pipe axis direction) × 500 μm (in the thickness direction), taking each measurement position as a center, is determined, and defined as the polygonal ferrite fraction.

The EBSD-OIM is performed at a field magnification (observation magnification) of 400 times, and at a measurement step of 0.3 $\mu$m.

The polygonal ferrite fraction is determined by a KAM (Kernel Average Misorientation) method included in EBSD-OIM.

Specifically, the field of view is first divided into regular hexagonal pixel units, and one certain regular hexagonal pixel unit in the field of view is selected as a central pixel. Subsequently, orientation differences between respective pixels are determined in the total of 37 pixels which are composed of: the thus selected central pixel; 6 pixels outside the central pixel; 12 pixels further outside these 6 pixels; and 18 pixels still further outside these 12 pixels. Thereafter, the mean value of the thus obtained orientation differences is determined, and defined as the KAM value of the central pixel. In the same manner, the KAM values of the respective pixels included in the field of view are determined. The method of calculating these KAM values is a method sometimes referred to as "third approximation".

Based on the above results, a KAM map showing the KAM values of the respective pixels included in the field of view is prepared.

Based on the thus prepared KAM map, an area fraction of pixels having a KAM value of 1° or less with respect to the total area of the field of view is determined, as the polygonal ferrite fraction.

Examples of achievement means for controlling the polygonal ferrite fraction in the metallographic microstructure of each of the outer surface layer portion B, the $1/4t_B$ portion and the $1/2t_B$ portion, within the range of from 0 to 50%, include:

   using a hot-rolled steel sheet having the chemical composition in the present disclosure, as the material of the electric resistance welded steel pipe; and
   controlling production conditions for producing the hot-rolled steel sheet.


(Average Crystal Grain Size)

The average crystal grain size in the outer surface layer portion B, the $1/4t_B$ portion and the $1/2t_B$ portion is 20 $\mu$m or less. This allows for ensuring the low temperature toughness of the base metal portion.

The average crystal grain size in the outer surface layer portion B, the $1/4t_B$ portion and the $1/2t_B$ portion is preferably 15 $\mu$m or less.

The lower limit of the average crystal grain size in the outer surface layer portion B, the $1/4t_B$ portion and the $1/2t_B$ portion is not particularly limited, and the lower limit is, for example, 3 $\mu$m, and preferably 5 $\mu$m.

In the present disclosure, the term "average crystal grain size" refers to a value obtained by multiplying the mean lineal intercept length d defined in ASTM E112, by 1.12.

The average crystal grain size in the outer surface layer portion B, the $1/4t_B$ portion and the $1/2t_B$ portion (namely, the value obtained by multiplying the mean lineal intercept length d defined in ASTM E112, by 1.12), in the present disclosure, is determined based on optical micrographs (taken at a magnification of 500 times) of the respective measurement positions (namely, the outer surface layer portion B, the $1/4t_B$ portion, and the $1/2t_B$ portion) in the L cross section at the base metal 180° position.

Specifically, samples for observing the respective measurement positions (namely, the outer surface layer portion B, the $1/4t_B$ portion, and the $1/2t_B$ portion) in the L cross section at the base metal 180° position, are each obtained from the electric resistance welded steel pipe, in the same manner as the method of measuring the polygonal ferrite fraction described above. The observation surface of each of the thus obtained samples is polished for a period of from 30 to 60 minutes, using a colloidal silica abrasive. Each polished observation surface is subjected to nital corrosion. An optical micrograph (magnification: 500 times) is captured for each measurement position after the nital corrosion.

Based on the thus obtained optical micrographs, the mean lineal intercept length d is determined in accordance with ASTM E112. The resulting mean lineal intercept length d is multiplied by 1.12, to determine the average crystal grain size.

Examples of achievement means for controlling the average crystal grain size in the outer surface layer portion B, the $1/4t_B$ portion and the $1/2t_B$ portion, to 20 $\mu$m or less, include:

   using a hot-rolled steel sheet having the chemical composition in the present disclosure, as the material of the electric resistance welded steel pipe; and
   controlling the production conditions (such as slab heating temperature, rolling reduction ratio in a non-recrystallization region, and coiling temperature) for producing the hot-rolled steel sheet.


(Structure Other Than Polygonal Ferrite)

In the metallographic microstructure of each of the outer surface layer portion B, the $1/4t_B$ portion and the $1/2t_B$ portion, a structure other than polygonal ferrite is not particularly limited. The structure other than polygonal ferrite may be any structure, as long as the tensile strength and the yield strength of the electric resistance welded steel pipe fall within the respective ranges described above.

The metallographic microstructure of each of the outer surface layer portion B, the $1/4t_B$ portion and the $1/2t_B$ portion preferably contains at least one of bainite or acicular ferrite, as the structure other than polygonal ferrite.

Whether or not the metallographic microstructure of each of the outer surface layer portion B, the $1/4t_B$ portion and the $1/2t_B$ portion contains at least one of bainite or acicular ferrite is determined, based on the optical micrographs used for the measurement of the average crystal grain size.

In the present disclosure, the term "acicular ferrite" refers to a structure in which prior austenite grain boundaries are unclear, and which contains needle-like ferrite.

Further, the concept of bainite in the present disclosure encompasses all of the following:

granular bainite which has clear prior austenite grain boundaries, which contains block ferrite, and which contains a carbide or an austenite-martensite composite formed adjacent thereto;

upper bainite which has clear prior austenite grain boundaries, which contains lathlike bainitic ferrite, and which contains a carbide and/or an austenite-martensite composite present between the structures of the bainitic ferrite; and

lower bainite which has clear prior austenite grain boundaries, which contains lathlike bainitic ferrite, and which contains a carbide and/or an austenite-martensite composite present within the structures of the bainitic ferrite.

"Collection of Photographs of Steel Bainite 1" (published by Iron and Steel Institute of Japan, June, 1992) can be referred to regarding bainite and acicular ferrite.

< Metallographic microstructures of Electric Resistance Welded Portion (Outer Surface Layer Portion S, $1/4t_S$ Portion, and $1/2t_S$ Portion) >

(Polygonal Ferrite Fraction)

In the electric resistance welded portion of the electric resistance welded steel pipe according to the present disclosure, the metallographic microstructure of the outer surface layer portion S, the metallographic microstructure of the $1/4t_S$ portion and the metallographic microstructure of the $1/2t_S$ portion, have polygonal ferrite fractions of from 0 to 30%, from 0 to 40% and from 0 to 50%, respectively.

These polygonal ferrite fractions in the electric resistance welded portion also contribute to an improvement in the strength of the electric resistance welded steel pipe, in the same manner as the polygonal ferrite fraction in the base metal portion.

The polygonal ferrite fraction in the metallographic microstructure of the outer surface layer portion S is preferably from 0 to 25%.

The polygonal ferrite fraction in the metallographic microstructure of the $1/4t_S$ portion is preferably from 10 to 30%.

The polygonal ferrite fraction in the metallographic microstructure of the $1/2t_S$ portion is preferably from 10 to 30%.

A value obtained by subtracting the polygonal ferrite fraction in the metallographic microstructure of the $1/4t_S$ portion from the polygonal ferrite fraction in the metallographic microstructure of the $1/2t_S$ portion is preferably from 0 to 5%.

A value obtained by subtracting the polygonal ferrite fraction in the metallographic microstructure of the outer surface layer portion S from the polygonal ferrite fraction in the metallographic microstructure of the $1/4t_S$ portion is preferably from 0 to 25%.

A value obtained by subtracting the polygonal ferrite fraction in the metallographic microstructure of the outer surface layer portion S from the polygonal ferrite fraction in the metallographic microstructure of the $1/2t_S$ portion is preferably from 0 to 25%.

The measurement of the polygonal ferrite fraction in the metallographic microstructure of the outer surface layer portion S is performed for the outer surface layer portion S in the electric resistance welded portion (abutting portion) in a C cross section of the electric resistance welded steel pipe.

The term "C cross section" as used herein refers to a cross section perpendicular to the pipe axis direction.

The method itself of measuring the polygonal ferrite fraction is the same as the method of measuring the polygonal ferrite fraction in the metallographic microstructure of the base metal portion (each of the outer surface layer portion B, the $1/4t_B$ portion and the $1/2t_B$ portion).

Examples of achievement means for controlling the polygonal ferrite fractions in the metallographic microstructure of the outer surface layer portion S, the metallographic microstructure of the $1/4t_S$ portion and the metallographic microstructure of the $1/2t_S$ portion, within the range of from 0 to 30%, from 0 to 40% and from 0 to 50%, respectively, include:

using a hot-rolled steel sheet having the chemical composition in the present disclosure, as the material of the electric resistance welded steel pipe;

controlling the production conditions of the hot-rolled steel sheet;

performing a seam heat treatment (namely, heating and cooling) on the electric resistance welded portion, from the outer surface side thereof; and

controlling the conditions (namely, heating conditions and/or cooling conditions) of the seam heat treatment.

(Average Crystal Grain Size)

Each of the average crystal grain size in the outer surface layer portion S, the average crystal grain size in the $1/4t_S$ portion and the average crystal grain size in the 1/2ts portion, is 20 $\mu$m or less. This allows for ensuring the low temperature toughness of the electric resistance welded portion.

Each of the average crystal grain size in the outer surface layer portion S, the average crystal grain size in the $1/4t_S$ portion and the average crystal grain size in the 1/2ts portion, is preferably 15 $\mu$m or less.

The lower limit of each of the average crystal grain size in the outer surface layer portion S, the average crystal grain size in the $1/4t_S$ portion and the average crystal grain size in the $1/2t_S$ portion, is not particularly limited, and the lower limit is, for example, 3 $\mu$m, and preferably 5 $\mu$m.

The measurement of the average crystal grain size in the outer surface layer portion S, the measurement of the average crystal grain size in the $1/4t_B$ portion and the measurement of the average crystal grain size in the $1/2t_B$ portion, are performed on the outer surface layer portion S, the $1/4t_B$ portion and the $1/2t_B$ portion, respectively, in the abutting portion in the C cross section of the electric resistance welded steel pipe.

The method itself of measuring the average crystal grain size is the same as the method of measuring the average crystal grain size in the outer surface layer portion B, the $1/4t_B$ portion and the $1/2t_B$ portion.

Examples of achievement means for controlling each of the average crystal grain size in the outer surface layer portion S, the average crystal grain size in the $1/4t_B$ portion and the average crystal grain size in the $1/2t_B$ portion, to 20 $\mu$m or less, include:

using a hot-rolled steel sheet having the chemical composition in the present disclosure, as the material of the electric resistance welded steel pipe;

controlling the production conditions of the hot-rolled steel sheet; and

controlling the conditions (namely, heating conditions and/or cooling conditions) when performing a seam heat treatment on the electric resistance welded portion from the outer surface side thereof.

(Structure Other Than Polygonal Ferrite)

In the metallographic microstructure of each of the outer surface layer portion S, the $1/4t_S$ portion and the $1/2t_S$ portion, a structure other than polygonal ferrite is not particularly limited. The structure other than polygonal ferrite may be any structure, as long as the tensile strength and the yield strength of the electric resistance welded steel pipe fall within the respective ranges described above.

The metallographic microstructure of each of the outer surface layer portion S, the $1/4t_S$ portion and the $1/2t_S$ portion preferably contains at least one of bainite or acicular ferrite, as the structure other than polygonal ferrite.

Whether or not the metallographic microstructure of each of the outer surface layer portion S, the $1/4t_S$ portion and the $1/2t_S$ portion contains at least one of bainite or acicular ferrite is determined, based on the optical micrographs used for the measurement of the average crystal grain size.

The details regarding bainite and acicular ferrite are each as described above.

< Difference in Hardness [Outer Surface Layer Portion B - $1/2t_B$ Portion] >

In the base metal portion, the value obtained by subtracting the hardness of the $1/2t_B$ portion from the hardness of the outer surface layer portion B (also referred to as "difference in hardness [outer surface layer portion B - $1/2t_B$ portion]" in the present disclosure) is from 0 HV10 to 30 HV10. This improves the low temperature toughness of the base metal portion.

The lower limit of the difference in hardness [outer surface layer portion B - $1/2t_B$ portion] may be 5 HV10 or more.

In the present disclosure, the term "hardness" refers to a Vickers hardness.

Each of the hardness of the outer surface layer portion B and the hardness of the $1/2t_B$ portion is determined by performing a Vickers hardness test for each of the outer surface layer portion B and the $1/2t_B$ portion in the L cross section at the base metal 180° position, in accordance with JIS Z 2244: 2009.

In the present disclosure, the "HV10" represents a "hardness symbol" when a Vickers hardness test is performed at a test force of 98 N (10 kgf) (see, JIS Z 2244: 2009).

Examples of achievement means for controlling the difference in hardness [outer surface layer portion B - 1/2t$_B$ portion] within the range of from 0 HV10 to 30 HV10, include:

using a hot-rolled steel sheet having the chemical composition in the present disclosure, as the material of the electric resistance welded steel pipe; and
controlling the production conditions for producing the hot-rolled steel sheet.

< Difference in Hardness [Outer Surface Layer Portion S - 1/2t$_S$ Portion] >

In the electric resistance welded portion, the value obtained by subtracting the hardness of the 1/2t$_S$ portion from the hardness of the outer surface layer portion S (also referred to as "difference in hardness [outer surface layer portion S - 1/2t$_S$ portion]" in the present disclosure) is from 0 HV10 to 30 HV10.

This improves the low temperature toughness of the electric resistance welded portion.

The difference in hardness [outer surface layer portion S - 1/2t$_S$ portion] may be 5 HV10 or more, or 8 HV10 or more.

Each of the hardness of the outer surface layer portion S and the hardness of the 1/2t$_S$ portion is determined by performing a Vickers hardness test for each of the outer surface layer portion S and the 1/2ts portion in the C cross section of the electric resistance welded steel pipe, in accordance with JIS Z 2244: 2009.

Examples of achievement means for controlling the difference in hardness (also referred to as [outer surface layer portion S - 1/2t$_S$ portion]) within the range of from 0 HV10 to 30 HV10, include:

using a hot-rolled steel sheet having the chemical composition in the present disclosure, as the material of the electric resistance welded steel pipe;
controlling the production conditions for producing the hot-rolled steel sheet; and
controlling the conditions (namely, heating conditions and/or cooling conditions) when performing a seam heat treatment on the electric resistance welded portion from the outer surface side thereof.

< Tensile Strength (TS) >

The electric resistance welded steel pipe according to the present disclosure has a tensile strength (TS) of from 500 MPa to 700 MPa.

The term "tensile strength" as used herein refers to the tensile strength in the pipe axis direction.

When the TS is 500 MPa or more, the strength required as an electric resistance welded steel pipe for a linepipe is more easily satisfied. The TS is preferably 540 MPa or more.

When the TS is 700 MPa or less, it is advantageous in terms of bending deformability or a reduction in buckling, at the time of laying a pipeline using the electric resistance welded steel pipe for a linepipe. The TS is preferably 650 MPa or less, and more preferably 630 MPa.

< Yield Strength (YS) >

The electric resistance welded steel pipe according to the present disclosure has a yield strength (YS) of from 410 MPa to 560 MPa.

The term "yield strength" as used herein refers to the yield strength in the pipe axis direction.

When the YS is 410 MPa or more, the strength required as an electric resistance welded steel pipe for a linepipe is more easily satisfied. The YS is preferably 500 MPa or more.

When the YS is 560 MPa or less, it is advantageous in terms of bending deformability or a reduction in buckling, at the time of laying a pipeline using the electric resistance welded steel pipe for a linepipe. The YS is preferably 550 MPa or less.

The YS and the TS are measured by the following method.

A tensile test specimen having a full thickness is obtained from the base metal 180° position of the electric resistance welded steel pipe. Specifically, the tensile test specimen is obtained such that a longitudinal direction of the tensile test specimen is parallel to the pipe axis direction of the electric resistance welded steel pipe, and that the shape of a transverse cross section (namely, a cross section parallel to a width direction and the thickness direction of the tensile test specimen) of the tensile test specimen is in the form of an arc.

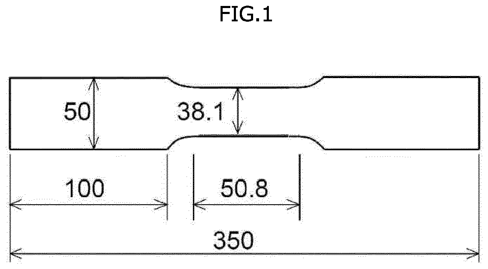

FIG. 1 is a schematic front view of the tensile test specimen to be used in a tensile test.

The unit of each numerical value in FIG. 1 is "mm".

As shown in FIG. 1, the length of the parallel portion of the tensile test specimen is 50.8 mm, and the width of the parallel portion is 38.1 mm.

Using this tensile test specimen, a tensile test is carried out at normal temperature, taking the pipe axis direction as the test direction, and in accordance with API 5CT standard.

Based on the test result, the YS and the TS are determined.

In the tensile test, it is preferred that no yielding elongation is substantially observed.

The fact that no yield elongation is substantially observed indicates that the yield elongation is less than 1%.

Further, the fact that no yield elongation is substantially observed in the tensile test indicates that the electric resistance welded steel pipe is an as-rolled electric resistance welded steel pipe.

The term "as-rolled electric resistance welded steel pipe" as used herein refers to an electric resistance welded steel pipe which has not been subjected to any heat treatment other than the seam heat treatment, after pipe-making.

In contrast, in an electric resistance welded steel pipe which has been subjected to a heat treatment (such as tempering) other than the seam heat treatment after pipe-making, a substantial yield elongation (a yield elongation of 1% or more) is observed when subjected to a tensile test in the pipe axis direction.

< Yield Ratio (YR) >

In the electric resistance welded steel pipe according to the present disclosure, the yield ratio (YR = YS/TS) is not particularly limited. The YR is, for example, from 0.85 to 0.97.

The term "yield ratio" as used herein refers to the yield ratio in the pipe axis direction.

The YR is more preferably from 0.85 to 0.95, and still more preferably from 0.85 to 0.92, from the viewpoint of effectively reducing buckling, at the time of laying a pipeline using the electric resistance welded steel pipe for a linepipe.

< Thicknesses ($t_B$ and ts) >

As described above, each of $t_B$ (namely, the thickness of the base metal portion) and ts (namely, the thickness of the electric resistance welded portion), in the electric resistance welded steel pipe according to the present disclosure, is 15 mm or more.

Therefore, the electric resistance welded steel pipe according to the present disclosure has an excellent strength.

In general, the low temperature toughness tends to deteriorate, as described above, in the case of an electric resistance welded steel pipe having a thickness of 15 mm or more.

However, as described above, the electric resistance welded steel pipe according to the present disclosure shows an excellent low temperature toughness, while being an electric resistance welded steel pipe having a thickness (namely, each of $t_B$ and ts) of 15 mm or more.

Each of $t_B$ and ts is preferably from 15 mm to 30 mm, more preferably from 15 mm to 28 mm, and still more preferably from 15 mm to 25.4 mm.

The lower limit of each of $t_B$ and ts may be 17 mm, or 18 mm.

The ratio of ts to $t_B$ (namely, the ratio $t_S/t_B$) is usually 1.0, but may be from 0.8 to 1.2, or 0.9 to 1.1.

< Outer Diameter >

The electric resistance welded steel pipe according to the present disclosure has an outer diameter, for example, of from 304.8 mm to 609.6 mm (namely, from 12 to 24 inches).

When the outer diameter is 304.8 mm (namely, 12 inches) or more, the electric resistance welded steel pipe has an excellent transportation efficiency of fluid (such as natural gas). The outer diameter is preferably 355.6 mm (namely, 14 inches) or more.

When the outer diameter is 609.6 mm (namely, 24 inches) or less, on the other hand, the electric resistance welded steel pipe has an excellent production suitability. The outer diameter is more preferably 508 mm (namely, 20 inches) or less.

< One Example of Method of Producing Electric Resistance Welded Steel Pipe (Production Method A) >

One example of the method of producing the electric resistance welded steel pipe according to the present disclosure (hereinafter, referred to as "production method A") will now be described.

The production method A is a method of producing the electric resistance welded steel pipes of Examples to be described later.

The production method A includes:

a slab preparation step of preparing a slab having the chemical composition in the present disclosure;

a hot rolling step of hot rolling the thus prepared slab under the conditions to be described later, to obtain a hot-rolled steel sheet;

a water cooling step of the hot-rolled steel sheet, in which the hot-rolled steel sheet is cooled with water until the temperature of the outer surface of the hot-rolled steel sheet reaches a coiling temperature of from 500 to 650°C;

a coiling step of coiling the hot-rolled steel sheet which has been water-cooled to the coiling temperature, at the coiling temperature, to obtain a hot coil composed of the hot-rolled steel sheet;

a pipe-making step in which the hot-rolled steel sheet is uncoiled from the hot coil, the uncoiled hot-rolled steel sheet is roll-formed to prepare an open pipe, and the abutting portion in the thus prepared open pipe is subjected to electric resistance welding to form an electric resistance welded portion, thereby obtaining an electric resistance welded steel pipe before being subjected to a seam heat treatment; and

a seam heat treatment step of performing the seam heat treatment to be described later, on the electric resistance welded portion before being subjected to the seam heat treatment.

The production method A enables to produce the electric resistance welded steel pipe according to the present disclosure.

The respective steps in the production method A will now be described.

(Preparation Step)

The slab preparation step in the production method A is a step of preparing a slab having the above described chemical composition.

The step of preparing a slab may be a step of producing a slab, or may be a step of simply preparing a slab which has been produced in advance.

In the case of producing a slab, for example, a molten steel having the above described chemical composition is produced, and the thus produced molten steel is used to produce the slab. At this time, the slab may be produced by a continuous casting method, or alternatively, the slab may be produced by forming an ingot using the molten steel, and subjecting the ingot to blooming.

(Hot Rolling Step)

The hot rolling step in the production method A is a step of heating the slab prepared above, and hot rolling the heated slab to obtain a hot-rolled steel sheet.

The slab is heated at a slab heating temperature of from 1,000°C to 1,200°C (preferably from 1,100°C to 1,200°C).

When the slab heating temperature is adjusted to 1,000°C or higher, the above described polygonal ferrite fraction (from 0 to 50%) of each portion of the base metal portion is more easily achieved, and the strength of the electric resistance welded steel pipe is more easily ensured.

When the slab heating temperature is adjusted to 1,200°C or lower, coarsening of austenite grains is reduced, and a fine structure is more easily obtained. As a result, an average crystal grain size in the outer surface layer portion B, the $1/4t_B$ portion and the $1/2t_B$ portion of 20 $\mu$m or less, is more easily achieved.

The term "slab heating temperature" as used herein refers to the temperature of the outer surface of the slab.

In the hot rolling step, the slab which has been heated to the slab heating temperature is hot-rolled under the conditions of a finish rolling start temperature of 890°C or higher, a rolling reduction ratio in the non-recrystallization region of 2.5 or more and a finish rolling finishing temperature of 770°C or higher, to obtain a hot-rolled steel sheet.

The finish rolling start temperature is preferably from 890°C to 940°C, and more preferably from 900°C to 930°C.

Each of the terms "finish rolling start temperature" and the "finish rolling finishing temperature" as used herein refers to the temperature of the outer surface of the hot-rolled steel sheet, during production (during the hot rolling).

The rolling reduction ratio in the non-recrystallization region is set to 2.5 or more.

As a result, an average crystal grain size in the base metal portion of 20 $\mu$m or less is more easily achieved.

The rolling reduction ratio in the non-recrystallization region is preferably 3 or more. The upper limit of the rolling reduction ratio in the non-recrystallization region is not particularly limited. The rolling reduction ratio in the non-recrystallization region may be 4 or less, from the viewpoint of improving the production suitability of the hot-rolled steel sheet.

Strictly speaking, the boundary between a recrystallization region and the non-recrystallization region varies depending on the composition of the steel, and is, for example, a temperature of from about 900 to 950°C.

In the present disclosure, the term "rolling reduction ratio in the non-recrystallization region" refers to the rolling reduction ratio in a temperature region in which the temperature of the outer surface is 950°C or lower.

In the hot rolling step, the finish rolling finishing temperature is 770°C or higher.

The finish rolling finishing temperature is preferably from 770°C to 850°C, and more preferably from 780°C to 840°C.

Further, in the finish rolling in the hot rolling step, it is preferred that the hot rolling in an austenite region is carried out in one or more passes, and that the rolling reduction ratio in one pass is 20% or less.

(Water Cooling Step of Hot-Rolled Steel Sheet, and Coiling Step)

The water cooling step of the hot-rolled steel sheet in the production method A is a step in which the hot-rolled steel sheet after being subjected to finish rolling is cooled with water until the temperature of the outer surface of the hot-rolled steel sheet reaches a coiling temperature of from 500 to 650°C.

The coiling step is a step of coiling the hot-rolled steel sheet which has been water-cooled to the coiling temperature, at the coiling temperature, to obtain a hot coil composed of the hot-rolled steel sheet.

When the coiling temperature is adjusted to 500°C or higher, a fine structure is more easily obtained. As a result, an average crystal grain size in the outer surface layer portion B, the $1/4t_B$ portion and the $1/2t_B$ portion of 20 $\mu$m or less, is more easily achieved.

The term "coiling temperature" as used herein refers to the temperature of the outer surface of the hot-rolled steel sheet.

(Pipe-Making Step)

The pipe-making step in the production method A is a step in which the hot-rolled steel sheet is uncoiled from the hot coil, the uncoiled hot-rolled steel sheet is roll-formed to prepare an open pipe, and the abutting portion in the thus prepared open pipe is subjected to electric resistance welding to form an electric resistance welded portion, thereby obtaining an electric resistance welded steel pipe before being subjected to a seam heat treatment.

Each operation in the pipe-making step may be carried out in accordance with an ordinary method.

(Seam Heat Treatment Step)

The seam heat treatment step in the production method A is a step of performing a seam heat treatment on the electric resistance welded portion of the electric resistance welded steel pipe before the electric resistance welded portion is subjected to the seam heat treatment. The seam heat treatment in the production method A is carried out by performing heating and cooling, in this order, on the electric resistance welded portion before being subjected to the seam heat treatment, from the outer surface side of the electric resistance welded portion.

More specifically, the seam heat treatment in the production method A is carried out as follows.

First, the electric resistance welded portion before being subjected to the seam heat treatment is heated from the outer surface side until the temperature of the outer surface reaches a heating temperature S within the range of from 900 to 1,000°C, and retained for a retention time within the range of from 1 to 5 seconds, in a state in which the temperature of the outer surface is kept at the heating temperature S. Next, the electric resistance welded portion after being retained is cooled from the outer surface side at a first cooling rate within the range of from 10°C/s to 40°C/s, to a first cooling stop temperature within the range of from 600 to 680°C (hereinafter, the cooling up to this point is referred to as a "first cooling"), and then cooled at a second cooling rate of less than 10°C/s to room temperature (hereinafter, the cooling up to this point is referred to as a "second cooling").

Each of the terms "heating temperature S" and the "first cooling stop temperature" refers to the temperature of the outer surface of the electric resistance welded portion.

Each of the terms "first cooling rate" and the "second cooling rate" refers to the cooling rate at the outer surface of the electric resistance welded portion.

In the seam heat treatment in the production method A, a heating temperature S of 900°C or higher contributes to an improvement in the strength of the electric resistance welded portion after the seam heat treatment (after the cooling).

A heating temperature S of 1,000°C or lower contributes to achieving a difference in hardness [outer surface layer portion B - $1/2t_B$ portion] of from 0 HV10 to 30 HV10.

A retention time at the heating temperature S of 1 second or more contributes to an improvement in the strength of the electric resistance welded portion after the seam heat treatment (after the cooling).

A retention time at the heating temperature S of 5 seconds or less contributes to improving the efficiency of the seam heat treatment (namely, productivity).

The heating in the seam heat treatment is carried out, for example, by induction heating.

In the seam heat treatment in the production method A, a first cooling rate of 10°C/s or more contributes to an improvement in the strength of the electric resistance welded portion after the seam heat treatment (after the cooling).

A first cooling rate of 40°C/s or less contributes to achieving a difference in hardness [outer surface layer portion B - $1/2t_B$ portion] of from 0 HV10 to 30 HV10.

A first cooling stop temperature of 600°C or higher contributes to achieving a difference in hardness [outer surface layer portion B - 1/2t$_B$ portion] of from 0 HV10 to 30 HV10.

A first cooling stop temperature of 680°C or lower contributes to an improvement in the strength of the electric resistance welded portion after the seam heat treatment (after the cooling).

A preferred embodiment of the first cooling in the above described conditions is water cooling.

In this case, examples of means for achieving a first cooling rate within the range of from 10°C/s to 40°C/s include: tuning a water-cooling shower into mist; adjusting the flow rate of the water-cooling shower; and adjusting the angle of the water-cooling shower.

In the seam heat treatment in the production method A, a preferred embodiment of the second cooling (namely, cooling at a second cooling rate of less than 10°C/s, to room temperature) is air cooling.

The production method A may include, in addition to the seam heat treatment step (hereinafter, also referred to as a "first seam heat treatment step") carried out under the above descried conditions, a second seam heat treatment step of performing a second seam heat treatment.

The seam heat treatment in the second seam heat treatment step is carried out, for example, by performing heating and cooling, in this order, on the electric resistance welded portion of the electric resistance welded steel pipe after the first seam heat treatment step, from the outer surface side thereof.

The heating temperature in the second seam heat treatment step is, for example, from 500°C to 700°C.

The method and conditions of the cooling in the second seam heat treatment step are not particularly limited. The cooling in the second seam heat treatment step may be water cooling or air cooling, or a combination of these.

The production method A may include other steps other than the steps described above.

Examples of the other steps include a step of adjusting the shape of the electric resistance welded steel pipe using sizing rolls, after the seam heat treatment step (after the second seam heat treatment step in the case of including the second seam heat treatment step).

The respective steps in the production method A do not affect the chemical composition of the steel.

Therefore, an electric resistance welded steel pipe whose base metal portion has the chemical composition in the present disclosure is produced, by using a slab having the chemical composition in the present disclosure.

The electric resistance welded steel pipe according to the present disclosure which has been described above has an excellent low temperature toughness, and thus is suitable particularly as an electric resistance welded steel pipe for a linepipe to be laid in a cold region.

EXAMPLES

Examples of the present disclosure will now be described below. However, the present disclosure is in no way limited to the following Examples.

Underlined values in Table 1 to Table 6 indicate that the corresponding values are outside the ranges of the requirements for the electric resistance welded steel pipe according to the present disclosure.

< Production of Electric Resistance Welded Steel Pipe >

Using slabs having the chemical compositions shown in Table 1 and Table 2 (Steel A1 to Steel A17, and Steel B1 to Steel B16) and having a thickness of 240 mm, as raw materials, electric resistance welded steel pipes of Test Nos. 1 to 43 were produced, in accordance with the above described production method A.

Test No. 1 to No. 17, No. 38 and No. 39 are Examples; Test No. 18 to No. 37, and No. 40 to No. 43 are Comparative Examples; and Test No. 44 is Reference Example (Specifically, an example of the electric resistance welded steel pipe in which the thicknesses (t$_B$ and t$_S$) are small).

In Table 1 and Table 2, numerical values shown in the column of each element are the contents of each element in % by mass.

In each of the chemical compositions, the balance excluding the elements shown in Table 1 and Table 2 is Fe and impurities.

In Table 1 and Table 2, the chemical compositions represented by Steel A1 to Steel A17 are within the range of the chemical composition in the present disclosure, and the chemical compositions represented by Steel B1 to Steel B16 are outside the range of the chemical composition in the present disclosure.

REM in Steel A3 is specifically Ce.

In Table 2, Ceq is a value represented by the above described Formula (i), and Pcm is a value represented by the above described Formula (ii).

The respective conditions in the production method A are as shown in Table 3. Specifically, in each Test No., each slab as described above was heated at the slab heating temperature shown in Table 3, and the heated slab was hot rolled under the respective conditions (the finish rolling start temperature, the rolling reduction ratio in the non-recrystallization region, and the finish rolling finishing temperature) shown in Table 3, to obtain a hot-rolled steel sheet. Subsequently, each resulting hot-rolled steel sheet was subjected to water cooling until the coiling temperature shown in Table 3 was reached, and wound at the coiling temperature. In this manner, a hot coil composed of the hot-rolled steel sheet having the sheet thickness shown in Table 3 was obtained, for each Test No.

**[0271]** Next, each hot-rolled steel sheet was uncoiled from the hot coil, the uncoiled hot-rolled steel sheet was roll-formed to prepare an open pipe, and the abutting portion in the thus prepared open pipe was subjected to electric resistance welding to form an electric resistance welded portion, thereby obtaining an electric resistance welded steel pipe before being subjected to a seam heat treatment, for each Test No. (pipe-making step).

In each of Test No. 1 to No. 37, and No. 40 to No. 44, the first seam heat treatment was performed, on the electric resistance welded portion before being subjected to the seam heat treatment, under the conditions (the heating temperature S, the retention time, the first cooling rate, and the first cooling stop temperature) shown in Table 3, and then the shape of the pipe was adjusted using sizing rolls, to obtain an electric resistance welded steel pipe having the outer diameter and the thicknesses ($t_B$ and ts) shown in Table 6.

In each of Test No. 38 and No. 39, the first seam heat treatment was performed, on the electric resistance welded portion before being subjected to the seam heat treatment, under the conditions (the heating temperature S, the retention time, the first cooling rate, and the first cooling stop temperature) shown in Table 3, followed by the second seam heat treatment at the heating temperature shown in Table 3, and then the shape of the pipe was adjusted using sizing rolls, to obtain an electric resistance welded steel pipe having the outer diameter and the thicknesses ($t_B$ and ts) shown in Table 6.

In any of the above described Test Nos., the heating in the first seam heat treatment was carried out by induction heating, and the first cooling in the first seam heat treatment was carried out by water cooling. In any of the above described Test Nos., the electric resistance welded steel pipe was air-cooled to room temperature at a cooling rate of less than 10°C/s (the second cooling), after stopping the first cooling in the first seam heat treatment.

The second seam heat treatment in each of Test No. 38 and No. 39 was carried out by air-cooling the electric resistance welded steel pipe to room temperature, after the induction heating at the heating temperature shown in Table 2.

At this time, the first cooling rate was controlled by tuning a water-cooling shower into mist, and adjusting the flow rate of the water-cooling shower and/or the angle of the water-cooling shower.

The retention time was controlled by adjusting the timing of starting the shower, after the completion of the heating.

The first cooling stop temperature was controlled by adjusting the timing of stopping the shower.

It is noted here that the production steps described above do not affect the chemical composition of the resulting steel. Therefore, the chemical composition of the base metal portion of each resulting electric resistance welded steel pipe can be regarded as the same as the chemical composition of each slab as the raw material.

< Measurements in Base Metal Portion >

For the base metal portion of each of the resulting electric resistance welded steel pipes, the following parameters were measured in accordance with the respective methods described above:

the polygonal ferrite fraction (hereinafter, also referred to as "PF fraction") and the hardness in the outer surface portion B;
the PF fraction and the hardness in $1/4t_B$ portion;
the PF fraction and the hardness in the $1/2t_B$ portion;
the average crystal grain size in the outer surface layer portion B, the $1/4t_B$ portion and the $1/2t_B$ portion; and
the difference in hardness [outer surface portion B - $1/2t_B$ portion].

The results are shown in Table 4.

When the structure other than polygonal ferrite (PF) in the metallographic microstructure of each of the outer surface portion B, the $1/4t_B$ portion and the $1/2t_B$ portion, was examined for each of the electric resistance welded steel pipes of the Examples (Test No. 1 to No. 17, No. 38 and No. 39), by the above described method, it has been found that the structure other than polygonal ferrite in each portion is composed of acicular ferrite and/or bainite.

< Measurements in Electric Resistance Welded Portion >

For the electric resistance welded portion of each of the resulting electric resistance welded steel pipes, the following parameters were measured in accordance with the respective methods described above:

the polygonal ferrite fraction (PF fraction), the hardness and the average crystal grain size, in the outer surface portion S;
the polygonal ferrite fraction (PF fraction), the hardness and the average crystal grain size, in the $1/4t_S$ portion;
the polygonal ferrite fraction (PF fraction), the hardness and the average crystal grain size, in the $1/2t_S$ portion; and
the difference in hardness [outer surface portion S - $1/2t_S$ portion].
The results are shown in Table 5.

When the structure other than polygonal ferrite (PF) in the metallographic microstructure of each of the outer surface portion S, the $1/4t_S$ portion and the $1/2t_S$ portion, was examined for each of the electric resistance welded steel pipes of the Examples (Test No. 1 to No. 17, No. 38 and No. 39), by the above described method, it has been found that the structure other than polygonal ferrite in each portion is composed of acicular ferrite and/or bainite.

< Measurement of TS and YS >

The TS and the YS of each of the resulting electric resistance welded steel pipes were measured by the above described method.
The results are shown in Table 6.
In any of the above described Test Nos., no yield elongation was substantially observed in the tensile test for measuring the TS and the YS.

< Evaluation of Low Temperature Toughness of Base Metal Portion; DWTT test >

An arc-shaped member was obtained from each of the resulting electric resistance welded steel pipes, and the thus obtained arc-shaped member was processed into a tabular shape, to prepare a DWTT test specimen having a full thickness.

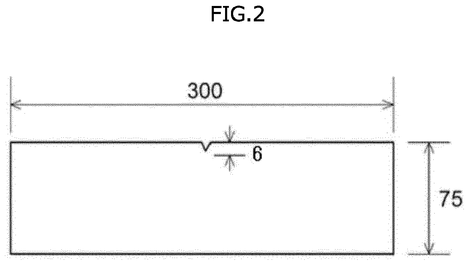

FIG. 2 is a schematic front view of the thus prepared DWTT test specimen.
The unit of each numerical value in FIG. 2 is "mm".
In FIG. 2, the longitudinal direction of the DWTT test specimen (the direction in which the test specimen has a length of 300 mm) corresponds to the pipe circumferential direction of the electric resistance welded steel pipe. The center of the longitudinal direction of the DWTT test specimen corresponds to a base metal 90° position of the electric resistance welded steel pipe.
As shown in FIG. 2, the DWTT test specimen was provided with a notch having a depth of 6 mm, at the center in the longitudinal direction (namely, at a position corresponding to the base metal 90° position of the electric resistance welded steel pipe).
Using the DWTT test specimen, a DWTT test was carried out at a test temperature of -20°C in accordance with API standard 2000, to measure a percent ductile fracture (%).
Two pieces of the DWTT test specimens were prepared for one electric resistance welded steel pipe, and the mean value of the measured results of the two pieces of the DWTT test specimens was defined as the DWTT percent ductile fracture (%) of the electric resistance welded steel pipe.
The results are shown in Table 6.
A higher DWTT percent ductile fracture (%) indicates a better low temperature toughness of the base metal portion. The DWTT percent ductile fracture (%) is preferably 85% or more.

< Evaluation of Low Temperature Toughness of Electric Resistance Welded Portion; CTOD test >

An arc-shaped member was obtained from each of the resulting electric resistance welded steel pipes, and the thus obtained arc-shaped member was processed into a tabular shape, to prepare a CTOD test specimen having a full thickness.
The size of the CTOD test specimen was (8.4 times the thickness of the electric resistance welded steel pipe; the length of the CTOD test specimen) × (twice the thickness of the electric resistance welded steel pipe; the width of the CTOD test specimen) × (the thickness of the electric resistance welded steel pipe; the thickness of the CTOD test specimen).
In the CTOD test specimen, the longitudinal direction (the direction in which the test specimen has a length 8.4 times the thickness) of the CTOD test specimen corresponds to the pipe circumferential direction of the electric resistance welded steel pipe, and the center of the longitudinal direction of the CTOD test specimen corresponds to the electric resistance welded portion of the electric resistance welded steel pipe.
The CTOD test specimen was provided with a notch of from 0.45 times to 0.55 times the width of the CTOD test specimen (namely, the twice the thickness of the electric resistance welded steel pipe), at the center in the longitudinal direction of the CTOD test specimen (namely, at a position corresponding to the electric resistance welded portion).

Using the CTOD test specimen, a CTOD test was carried out at a test temperature of -20°C in accordance with BS 7448 standard, to measure a CTOD value of the electric resistance welded portion.

Three pieces of the CTOD test specimens were prepared for one electric resistance welded steel pipe, and the mean value of the measured results (CTOD values) of the three pieces of the CTOD test specimens was defined as the CTOD value of the electric resistance welded steel pipe (mm).

The results are shown in Table 6.

A higher CTOD value (mm) indicates a better low temperature toughness of the electric resistance welded portion. The CTOD value (mm) is preferably 0.20 mm or more.

[Table 1]

| Steel No. | Elements (% by mass) | | | | | | | | | | | | | |
|---|---|---|---|---|---|---|---|---|---|---|---|---|---|---|
| | C | Si | Mn | P | S | Al | Ti | Nb | N | O | Cu | Ni | Cr | Mo |
| A1 | 0.08 | 0.25 | 1.6 | 0.017 | 0.0010 | 0.025 | 0.010 | 0.020 | 0.002 | 0.001 | | | 0.15 | |
| A2 | 0.10 | 0.35 | 1.6 | 0.010 | 0.0006 | 0.040 | 0.020 | 0.010 | 0.004 | 0.002 | | | 0.25 | |
| A3 | 0.09 | 0.20 | 1.6 | 0.015 | 0.0020 | 0.030 | 0.015 | 0.015 | 0.003 | 0.001 | | | 0.20 | |
| A4 | 0.12 | 0.20 | 1.6 | 0.010 | 0.0003 | 0.003 | 0.010 | 0.030 | 0.003 | 0.002 | | | | |
| A5 | 0.04 | 0.25 | 1.6 | 0.010 | 0.0010 | 0.003 | 0.010 | 0.030 | 0.004 | 0.002 | | | 0.30 | 0.3 |
| A6 | 0.05 | 0.01 | 1.6 | 0.010 | 0.0010 | 0.003 | 0.010 | 0.050 | 0.003 | 0.002 | 0.5 | 0.2 | | |
| A7 | 0.05 | 0.50 | 1.6 | 0.010 | 0.0010 | 0.003 | 0.010 | 0.030 | 0.002 | 0.002 | | 0.3 | | |
| A8 | 0.10 | 0.25 | 0.5 | 0.010 | 0.0005 | 0.003 | 0.010 | 0.020 | 0.003 | 0.002 | 0.3 | 0.2 | 0.10 | 0.3 |
| A9 | 0.05 | 0.25 | 2.0 | 0.010 | 0.0006 | 0.003 | 0.010 | 0.020 | 0.004 | 0.002 | | | | |
| A10 | 0.06 | 0.20 | 1.5 | 0.010 | 0.0008 | 0.001 | 0.010 | 0.030 | 0.002 | 0.001 | | 0.2 | 0.20 | |
| A11 | 0.06 | 0.20 | 1.5 | 0.010 | 0.0003 | 0.045 | 0.010 | 0.030 | 0.003 | 0.002 | | | 0.20 | 0.2 |
| A12 | 0.06 | 0.20 | 1.5 | 0.010 | 0.0010 | 0.003 | 0.005 | 0.040 | 0.003 | 0.002 | | | 0.20 | |
| A13 | 0.06 | 0.20 | 1.5 | 0.010 | 0.0010 | 0.003 | 0.025 | 0.030 | 0.002 | 0.002 | 0.1 | 0.3 | | |
| A14 | 0.06 | 0.20 | 1.5 | 0.010 | 0.0010 | 0.003 | 0.010 | 0.005 | 0.003 | 0.002 | | | | 0.2 |
| A15 | 0.06 | 0.20 | 1.5 | 0.010 | 0.0010 | 0.003 | 0.010 | 0.045 | 0.002 | 0.002 | | | 0.20 | |
| A16 | 0.12 | 0.01 | 1.5 | 0.010 | 0.0010 | 0.003 | 0.010 | 0.005 | 0.003 | 0.002 | 0.3 | 0.3 | | 0.2 |
| A17 | 0.12 | 0.40 | 2.0 | 0.010 | 0.0010 | 0.003 | 0.010 | 0.005 | 0.002 | 0.002 | | | | |
| B1 | 0.01 | 0.20 | 2.0 | 0.009 | 0.0010 | 0.003 | 0.010 | 0.020 | 0.003 | 0.002 | 0.3 | 0.3 | 0.30 | 0.3 |
| B2 | 0.20 | 0.20 | 1.6 | 0.009 | 0.0010 | 0.003 | 0.010 | 0.020 | 0.003 | 0.002 | | 0.2 | | 0.1 |
| B3 | 0.05 | 1.00 | 1.6 | 0.009 | 0.0010 | 0.003 | 0.010 | 0.020 | 0.003 | 0.002 | 0.2 | 0.2 | | 0.1 |
| B4 | 0.12 | 0.20 | 0.1 | 0.009 | 0.0010 | 0.003 | 0.010 | 0.020 | 0.003 | 0.002 | 0.2 | 0.3 | | 0.2 |
| B5 | 0.04 | 0.20 | 2.6 | 0.009 | 0.0010 | 0.003 | 0.010 | 0.020 | 0.003 | 0.002 | | | | |
| B6 | 0.05 | 0.20 | 1.6 | 0.009 | 0.0010 | 0.090 | 0.010 | 0.020 | 0.003 | 0.002 | 0.2 | 0.2 | | 0.1 |
| B7 | 0.05 | 0.20 | 1.6 | 0.009 | 0.0010 | 0.003 | 0.001 | 0.020 | 0.003 | 0.002 | 0.2 | 0.2 | | 0.1 |
| B8 | 0.05 | 0.20 | 1.6 | 0.009 | 0.0010 | 0.003 | 0.050 | 0.020 | 0.003 | 0.002 | 0.2 | 0.2 | | 0.1 |
| B9 | 0.05 | 0.20 | 1.6 | 0.009 | 0.0010 | 0.003 | 0.010 | 0.020 | 0.003 | 0.009 | 0.2 | 0.2 | | 0.1 |
| B10 | 0.05 | 0.20 | 1.6 | 0.009 | 0.0040 | 0.003 | 0.010 | 0.020 | 0.003 | 0.002 | 0.2 | 0.2 | | 0.1 |
| B11 | 0.05 | 0.20 | 1.6 | 0.030 | 0.0010 | 0.003 | 0.010 | 0.020 | 0.003 | 0.002 | 0.2 | 0.2 | | 0.1 |
| B12 | 0.05 | 0.20 | 1.6 | 0.009 | 0.0010 | 0.003 | 0.010 | 0.100 | 0.003 | 0.002 | 0.2 | 0.2 | | 0.1 |
| B13 | 0.05 | 0.20 | 1.6 | 0.009 | 0.0010 | 0.003 | 0.010 | 0.001 | 0.003 | 0.002 | 0.2 | 0.2 | | 0.1 |
| B14 | 0.04 | 0.50 | 0.5 | 0.017 | 0.0010 | 0.025 | 0.010 | 0.020 | 0.002 | 0.001 | | | | |

(continued)

| Steel No. | Elements (% by mass) | | | | | | | | | | | | | |
|---|---|---|---|---|---|---|---|---|---|---|---|---|---|---|
| | C | Si | Mn | P | S | Al | Ti | Nb | N | O | Cu | Ni | Cr | Mo |
| B15 | 0.12 | 0.50 | 2.0 | 0.010 | 0.0006 | 0.040 | 0.020 | 0.010 | 0.004 | 0.002 | | 0.5 | | 0.5 |
| B16 | 0.04 | 0.01 | 0.5 | 0.015 | 0.0020 | 0.030 | 0.015 | 0.015 | 0.003 | 0.001 | 0.4 | 0.5 | 0.20 | |

[Table 2]

| Steel No. | Elements (Continuation of Table 1; % by mass) | | | | | | | | | | | Ceq | Pcm |
|---|---|---|---|---|---|---|---|---|---|---|---|---|---|
| | V | B | W | Zr | Ta | Mg | Ca | REM | Y | Hf | Re | | |
| A1 | | | | | | | | | | | | 0.38 | 0.176 |
| A2 | | | | | | | 0.0003 | | | | | 0.42 | 0.204 |
| A3 | 0.01 | | | | | | 0.0030 | 0.0030 | | | | 0.40 | 0.188 |
| A4 | | | | | | | | | | | | 0.39 | 0.207 |
| A5 | | | | | | | 0.0003 | | | | | 0.43 | 0.163 |
| A6 | | | | 0.0010 | | | 0.0002 | | | | | 0.37 | 0.159 |
| A7 | | | | | 0.0010 | | 0.0002 | | | | | 0.34 | 0.152 |
| A8 | | 0.0003 | | | | 0.001 | | | | | | 0.30 | 0.178 |
| A9 | | | | | | | 0.0003 | | 0.0010 | | | 0.38 | 0.158 |
| A10 | | | | | | | 0.0002 | | | 0.0010 | | 0.36 | 0.155 |
| A11 | | | | | | | 0.0010 | | | | 0.0010 | 0.39 | 0.165 |
| A12 | | | 0.010 | | | | | | | | | 0.35 | 0.152 |
| A13 | | | | | | | 0.0010 | | | | | 0.34 | 0.152 |
| A14 | | | | | | | 0.0005 | | | | | 0.35 | 0.155 |
| A15 | | | | | | | | | | | | 0.35 | 0.152 |
| A16 | 0.10 | | | | | | 0.0003 | | | | | 0.47 | 0.239 |
| A17 | | 0.0020 | | | | | 0.0005 | | | | | 0.45 | 0.243 |
| B1 | | | | | | | | | | | | 0.50 | 0.172 |
| B2 | | | | | | | | | | | | 0.50 | 0.297 |
| B3 | | | | | | | | | | | | 0.36 | 0.183 |
| B4 | | | | | | | | | | | | 0.21 | 0.160 |
| B5 | | | | | | | | | | | | 0.47 | 0.177 |
| B6 | | | | | | | | | | | | 0.36 | 0.157 |
| B7 | | | | | | | | | | | | 0.36 | 0.157 |

(continued)

| Steel No. | Elements (Continuation of Table 1; % by mass) | | | | | | | | | | | Ceq | Pcm |
|---|---|---|---|---|---|---|---|---|---|---|---|---|---|
| | V | B | W | Zr | Ta | Mg | Ca | REM | Y | Hf | Re | | |
| B8 | | | | | | | | | | | | 0.36 | 0.157 |
| B9 | | | | | | | | | | | | 0.36 | 0.157 |
| B10 | | | | | | | | | | | | 0.36 | 0.157 |
| B11 | | | | | | | | | | | | 0.36 | 0.157 |
| B12 | | | | | | | | | | | | 0.36 | 0.157 |
| B13 | | | | | | | 0.0100 | | | | | 0.36 | 0.157 |
| B14 | | 0.0020 | | | | | | | | | | 0.12 | 0.092 |
| B15 | | | | | | | | | | | | 0.59 | 0.278 |
| B16 | | | | | | | | | | | | 0.21 | 0.104 |

[Table 3]

| Test No. | Steel No. | Hot rolling conditions | | | | | | First seam heat treatment conditions | | | | Whether or not second seam heat treatment is performed |
| --- | --- | --- | --- | --- | --- | --- | --- | --- | --- | --- | --- | --- |
| | | Slab heating temperature (°C) | Finish rolling start temperature (°C) | Rolling reduction ratio in non-recrystallization region | Sheet thickness (mm) | Finish rolling finishing temperature (°C) | Coiling temperature (°C) | Heating temperature S (°C) | Retention time (S) | First cooling rate (°C/s) | First cooling stop temperature (°C) | |
| 1 | A1 | 1100 | 900 | 3 | 17 | 800 | 550 | 900 | 1 | 40 | 620 | No |
| 2 | A2 | 1180 | 930 | 3 | 20 | 810 | 650 | 950 | 2 | 30 | 650 | No |
| 3 | A3 | 1150 | 930 | 3 | 23 | 830 | 600 | 930 | 3 | 20 | 680 | No |
| 4 | A4 | 1100 | 900 | 3 | 18 | 810 | 600 | 900 | 2 | 35 | 650 | No |
| 5 | A5 | 1100 | 900 | 3 | 24 | 790 | 550 | 950 | 3 | 40 | 650 | No |
| 6 | A6 | 1100 | 900 | 3 | 20 | 821 | 550 | 900 | 1 | 20 | 650 | No |
| 7 | A7 | 1100 | 900 | 3 | 19 | 810 | 600 | 950 | 2 | 35 | 660 | No |
| 8 | A8 | 1100 | 900 | 3 | 15 | 801 | 650 | 930 | 3 | 30 | 680 | No |
| 9 | A9 | 1100 | 900 | 3 | 17 | 792 | 600 | 940 | 3 | 40 | 650 | No |
| 10 | A10 | 1100 | 900 | 3 | 23 | 810 | 570 | 920 | 2 | 20 | 600 | No |
| 11 | A11 | 1100 | 900 | 3 | 21 | 800 | 580 | 900 | 5 | 30 | 630 | No |
| 12 | A12 | 1200 | 930 | 3 | 20 | 790 | 550 | 910 | 1 | 40 | 650 | No |
| 13 | A13 | 1100 | 900 | 3 | 17 | 810 | 570 | 900 | 3 | 35 | 640 | No |
| 14 | A14 | 1200 | 930 | 3 | 21 | 820 | 600 | 950 | 2 | 20 | 630 | No |
| 15 | A15 | 1100 | 900 | 3 | 22 | 830 | 640 | 930 | 3 | 30 | 660 | No |
| 16 | A16 | 1100 | 900 | 3 | 20 | 801 | 630 | 930 | 4 | 40 | 650 | No |
| 17 | A17 | 1100 | 900 | 3 | 19 | 790 | 600 | 950 | 1 | 10 | 620 | No |
| 18 | B1 | 1200 | 930 | 3 | 15 | 800 | 600 | 950 | 1 | 30 | 650 | No |
| 19 | B2 | 1150 | 930 | 3 | 19 | 830 | 600 | 900 | 1 | 40 | 600 | No |
| 20 | B3 | 1150 | 930 | 3 | 20 | 800 | 600 | 950 | 1 | 20 | 600 | No |
| 21 | B4 | 1180 | 930 | 3 | 24 | 800 | 590 | 950 | 2 | 40 | 650 | No |
| 22 | B5 | 1200 | 930 | 3 | 19 | 800 | 600 | 950 | 1 | 30 | 650 | No |

(continued)

| Test No. | Steel No. | Hot rolling conditions | | | | | | First seam heat treatment conditions | | | | Whether or not second seam heat treatment is performed |
| --- | --- | --- | --- | --- | --- | --- | --- | --- | --- | --- | --- | --- |
| | | Slab heating temperature (°C) | Finish rolling start temperature (°C) | Rolling reduction ratio in non-recrystallization region | Sheet thickness (mm) | Finish rolling finishing temperature (°C) | Coiling temperature (°C) | Heating temperature S (°C) | Retention time (S) | First cooling rate (°C/s) | First cooling stop temperature (°C) | |
| 23 | B6 | 1180 | 930 | 3 | 16 | 800 | 630 | 940 | 2 | 20 | 650 | No |
| 24 | A1 | 1250 | 930 | 3 | 20 | 900 | 550 | 930 | 1 | 30 | 650 | No |
| 25 | B7 | 1100 | 930 | 3 | 20 | 900 | 550 | 930 | 1 | 30 | 650 | No |
| 26 | B8 | 1200 | 930 | 3 | 22 | 897 | 600 | 920 | 1 | 40 | 650 | No |
| 27 | B9 | 1150 | 930 | 3 | 17 | 800 | 600 | 930 | 1 | 30 | 650 | No |
| 28 | B10 | 1150 | 930 | 3 | 18 | 800 | 600 | 920 | 1 | 20 | 650 | No |
| 29 | B11 | 1150 | 930 | 3 | 19 | 810 | 570 | 930 | 1 | 40 | 650 | No |
| 30 | B12 | 1100 | 900 | 3 | 20 | 820 | 550 | 900 | 1 | 20 | 650 | No |
| 31 | B13 | 1200 | 930 | 3 | 19 | 800 | 600 | 920 | 1 | 35 | 650 | No |
| 32 | A1 | 900 | 800 | 3 | 16 | 750 | 550 | 930 | 1 | 30 | 650 | No |
| 33 | A1 | 1100 | 900 | 2 | 18 | 800 | 550 | 930 | 1 | 40 | 650 | No |
| 34 | A1 | 1100 | 900 | 3 | 20 | 740 | 550 | 930 | 1 | 20 | 650 | No |
| 35 | A1 | 1100 | 900 | 3 | 20 | 800 | 25 | 950 | 1 | 40 | 650 | No |
| 36 | A1 | 1100 | 900 | 3 | 24 | 800 | 600 | 1200 | 1 | 20 | 600 | No |
| 37 | A1 | 1100 | 900 | 3 | 21 | 810 | 610 | 950 | 1 | 40 | 200 | No |
| 38 | A1 | 1100 | 900 | 3 | 17 | 800 | 550 | 900 | 1 | 40 | 400 | Yes (heating temperature: 650°C) |
| 39 | A1 | 1100 | 900 | 3 | 17 | 800 | 550 | 900 | 1 | 40 | 300 | Yes (heating temperature: 600°C) |
| 40 | A2 | 1180 | 930 | 3 | 20 | 810 | 650 | 950 | 2 | 80 | 600 | No |
| 41 | B14 | 1100 | 900 | 3 | 17 | 800 | 550 | 900 | 1 | 40 | 620 | No |

EP 3 872 205 A1

(continued)

| Test No. | Steel No. | Hot rolling conditions | | | | | | First seam heat treatment conditions | | | | Whether or not second seam heat treatment is performed |
| --- | --- | --- | --- | --- | --- | --- | --- | --- | --- | --- | --- | --- |
| | | Slab heating temperature (°C) | Finish rolling start temperature (°C) | Rolling reduction ratio in non-recrystallization region | Sheet thickness (mm) | Finish rolling finishing temperature (°C) | Coiling temperature (°C) | Heating temperature S (°C) | Retention time (S) | First cooling rate (°C/s) | First cooling stop temperature (°C) | |
| 42 | B15 | 1100 | 900 | 3 | 17 | 800 | 550 | 900 | 1 | 40 | 620 | No |
| 43 | B16 | 1100 | 900 | 3 | 17 | 800 | 550 | 900 | 1 | 40 | 620 | No |
| 44 | A1 | 1100 | 900 | 3 | 10 | 810 | 610 | 950 | 1 | 40 | 500 | No |

[Table 4]

| Test No. | Steel No. | Base metal portion | | | | | | Average crystal grain size ($\mu$m) | Difference in hardness [outer surface portion B - 1/2t$_B$ portion] (HV10) | Note |
|---|---|---|---|---|---|---|---|---|---|---|
| | | Outer surface layer portion B | | 1/4t$_B$ portion | | 1/2t$_B$ portion | | | | |
| | | PF fraction (%) | Hardness (HV10) | PF fraction (%) | Hardness (HV10) | PF fraction (%) | Hardness (HV10) | | | |
| 1 | A1 | 0 | 215 | 10 | 205 | 15 | 205 | 12 | 10 | Examples |
| 2 | A2 | 10 | 210 | 15 | 195 | 15 | 195 | 15 | 15 | |
| 3 | A3 | 20 | 205 | 25 | 190 | 25 | 190 | 13 | 15 | |
| 4 | A4 | 0 | 215 | 10 | 205 | 10 | 205 | 10 | 10 | |
| 5 | A5 | 10 | 230 | 15 | 205 | 15 | 205 | 12 | 25 | |
| 6 | A6 | 30 | 220 | 25 | 195 | 25 | 195 | 12 | 25 | |
| 7 | A7 | 15 | 225 | 15 | 205 | 15 | 205 | 12 | 20 | |
| 8 | A8 | 35 | 205 | 30 | 190 | 30 | 190 | 12 | 15 | |
| 9 | A9 | 10 | 230 | 10 | 210 | 10 | 210 | 12 | 20 | |
| 10 | A10 | 30 | 220 | 25 | 195 | 25 | 195 | 12 | 25 | |
| 11 | A11 | 30 | 220 | 25 | 195 | 25 | 195 | 12 | 25 | |
| 12 | A12 | 35 | 215 | 25 | 195 | 25 | 195 | 15 | 20 | |
| 13 | A13 | 35 | 210 | 25 | 195 | 25 | 195 | 12 | 15 | |
| 14 | A14 | 35 | 215 | 25 | 195 | 25 | 195 | 15 | 20 | |
| 15 | A15 | 35 | 215 | 25 | 195 | 25 | 195 | 12 | 20 | |
| 16 | A16 | 0 | 220 | 0 | 220 | 0 | 215 | 14 | 5 | |
| 17 | A17 | 0 | 225 | 0 | 225 | 0 | 220 | 13 | 5 | |

(continued)

| Test No. | Steel No. | Base metal portion | | | | | | Average crystal grain size (μm) | Difference in hardness [outer surface portion B - 1/2t_B portion] (HV10) | Note |
|---|---|---|---|---|---|---|---|---|---|---|
| | | Outer surface layer portion B | | 1/4t_B portion | | 1/2t_B portion | | | | |
| | | PF fraction (%) | Hardness (HV10) | PF fraction (%) | Hardness (HV10) | PF fraction (%) | Hardness (HV10) | | | |
| 18 | B1 | 50 | 170 | 60 | 160 | 60 | 160 | 10 | 10 | Comparative Examples |
| 19 | B2 | 0 | 255 | 0 | 245 | 0 | 245 | 20 | 10 | |
| 20 | B3 | 20 | 205 | 25 | 190 | 25 | 190 | 13 | 15 | |
| 21 | B4 | 50 | 170 | 60 | 160 | 60 | 160 | 10 | 10 | |
| 22 | B5 | 0 | 255 | 0 | 245 | 0 | 245 | 20 | 10 | |
| 23 | B6 | 35 | 205 | 30 | 190 | 30 | 190 | 12 | 15 | |
| 24 | A1 | 10 | 230 | 15 | 205 | 15 | 205 | 25 | 25 | |
| 25 | B7 | 20 | 210 | 25 | 205 | 25 | 205 | 22 | 5 | |
| 26 | B8 | 30 | 220 | 25 | 195 | 25 | 195 | 12 | 25 | |
| 27 | B9 | 30 | 220 | 25 | 195 | 25 | 195 | 12 | 25 | |
| 28 | B10 | 30 | 220 | 25 | 195 | 25 | 195 | 12 | 25 | |
| 29 | B11 | 20 | 205 | 25 | 190 | 25 | 190 | 13 | 15 | |
| 30 | B12 | 10 | 230 | 15 | 205 | 15 | 205 | 12 | 25 | |
| 31 | B13 | 30 | 220 | 25 | 195 | 25 | 195 | 22 | 25 | |
| 32 | A1 | 50 | 170 | 60 | 160 | 60 | 160 | 10 | 10 | |
| 33 | A1 | 35 | 215 | 25 | 195 | 25 | 195 | 25 | 20 | |
| 34 | A1 | 30 | 190 | 40 | 180 | 40 | 180 | 10 | 10 | |
| 35 | A1 | 0 | 260 | 0 | 245 | 0 | 245 | 25 | 15 | |
| 36 | A1 | 30 | 190 | 40 | 180 | 40 | 180 | 10 | 10 | |
| 37 | A1 | 30 | 190 | 40 | 180 | 40 | 180 | 10 | 10 | |
| 38 | A1 | 0 | 210 | 0 | 205 | 0 | 205 | 12 | 5 | Examples |
| 39 | A1 | 0 | 205 | 0 | 200 | 0 | 200 | 13 | 5 | |
| 40 | A2 | 10 | 210 | 15 | 195 | 15 | 195 | 15 | 15 | Comparative |
| 41 | B14 | 70 | 150 | 80 | 145 | 80 | 145 | 10 | 5 | Examples |
| 42 | B15 | 0 | 270 | 0 | 260 | 0 | 260 | 25 | 10 | |
| 43 | B16 | 70 | 150 | 80 | 145 | 80 | 145 | 10 | 5 | |
| 44 | A1 | 20 | 195 | 25 | 195 | 25 | 190 | 10 | 5 | Reference Example |

[Table 5]

| Test No. | Steel No. | Electric resistance welded portion | | | | | | | | | Difference in hardness [outer surface portion S - 1/2ts portion] (HV10) | Note |
| | | Outer surface layer portion S | | | $1/4t_s$ portion | | | $1/2ts$ portion | | | | |
| | | PF fraction (%) | Hardness (HV10) | Average crystal grain size ($\mu$m) | PF fraction (%) | Hardness (HV10) | Average crystal grain size ($\mu$m) | PF fraction (%) | Hardness (HV10) | Average crystal grain size ($\mu$m) | | |
|---|---|---|---|---|---|---|---|---|---|---|---|---|
| 1 | A1 | 10 | 220 | 12 | 20 | 195 | 12 | 25 | 193 | 13 | 27 | Examples |
| 2 | A2 | 5 | 218 | 15 | 30 | 190 | 15 | 30 | 188 | 14 | 30 | |
| 3 | A3 | 5 | 218 | 14 | 30 | 190 | 13 | 30 | 189 | 13 | 29 | |
| 4 | A4 | 5 | 220 | 10 | 30 | 192 | 10 | 30 | 192 | 11 | 28 | |
| 5 | A5 | 10 | 220 | 12 | 20 | 205 | 11 | 20 | 205 | 11 | 15 | |
| 6 | A6 | 20 | 215 | 12 | 25 | 195 | 12 | 25 | 194 | 12 | 21 | |
| 7 | A7 | 15 | 215 | 12 | 20 | 207 | 11 | 20 | 207 | 12 | 8 | |
| 8 | A8 | 25 | 205 | 10 | 30 | 191 | 10 | 30 | 188 | 11 | 17 | |
| 9 | A9 | 10 | 220 | 11 | 20 | 210 | 11 | 20 | 209 | 12 | 11 | |
| 10 | A10 | 10 | 217 | 12 | 15 | 201 | 12 | 15 | 196 | 12 | 21 | |
| 11 | A11 | 5 | 220 | 11 | 12 | 200 | 10 | 12 | 198 | 11 | 22 | |
| 12 | A12 | 15 | 208 | 15 | 18 | 195 | 14 | 20 | 193 | 15 | 15 | |
| 13 | A13 | 20 | 210 | 12 | 25 | 197 | 12 | 25 | 197 | 13 | 13 | |
| 14 | A14 | 20 | 215 | 14 | 25 | 195 | 13 | 25 | 195 | 14 | 20 | |
| 15 | A15 | 20 | 215 | 12 | 25 | 196 | 11 | 25 | 196 | 13 | 19 | |
| 16 | A16 | 0 | 240 | 14 | 10 | 213 | 12 | 10 | 211 | 12 | 29 | |
| 17 | A17 | 0 | 223 | 14 | 10 | 210 | 13 | 10 | 209 | 13 | 14 | |

(continued)

| Test No. | Steel No. | Electric resistance welded portion | | | | | | | | | Difference in hardness [outer surface portion S - 1/2ts portion] (HV10) | Note |
| --- | --- | --- | --- | --- | --- | --- | --- | --- | --- | --- | --- | --- |
| | | Outer surface layer portion S | | | $1/4t_s$ portion | | | 1/2ts portion | | | | |
| | | PF fraction (%) | Hardness (HV10) | Average crystal grain size (μm) | PF fraction (%) | Hardness (HV10) | Average crystal grain size (μm) | PF fraction (%) | Hardness (HV10) | Average crystal grain size (μm) | | |
| 18 | B1 | 50 | 175 | 10 | 50 | 170 | 10 | 50 | 168 | 10 | 7 | |
| 19 | B2 | 0 | 255 | 20 | 0 | 240 | 18 | 0 | 238 | 19 | 17 | |
| 20 | B3 | 10 | 220 | 12 | 20 | 195 | 12 | 25 | 195 | 12 | 25 | |
| 21 | B4 | 50 | 175 | 10 | 50 | 170 | 10 | 50 | 167 | 14 | 8 | |
| 22 | B5 | 0 | 253 | 20 | 0 | 240 | 18 | 0 | 235 | 20 | 18 | |
| 23 | B6 | 10 | 220 | 12 | 20 | 212 | 11 | 20 | 209 | 12 | 11 | |
| 24 | A1 | 10 | 220 | 12 | 20 | 210 | 12 | 20 | 210 | 12 | 10 | |
| 25 | B7 | 12 | 215 | 15 | 25 | 205 | 15 | 25 | 205 | 15 | 10 | |
| 26 | B8 | 12 | 220 | 12 | 19 | 195 | 12 | 19 | 195 | 12 | 25 | |
| 27 | B9 | 15 | 220 | 12 | 21 | 195 | 12 | 21 | 192 | 12 | 28 | Comparative Examples |
| 28 | B10 | 20 | 205 | 13 | 25 | 190 | 13 | 25 | 190 | 13 | 15 | |
| 29 | B11 | 20 | 205 | 13 | 25 | 190 | 12 | 25 | 187 | 13 | 18 | |
| 30 | B12 | 15 | 215 | 12 | 20 | 207 | 12 | 20 | 207 | 11 | 8 | |
| 31 | B13 | 20 | 220 | 12 | 25 | 195 | 12 | 25 | 193 | 14 | 27 | |
| 32 | A1 | 22 | 220 | 12 | 25 | 197 | 12 | 25 | 197 | 13 | 23 | |
| 33 | A1 | 19 | 222 | 12 | 22 | 195 | 12 | 22 | 195 | 12 | 27 | |
| 34 | A1 | 15 | 220 | 12 | 19 | 195 | 12 | 19 | 195 | 13 | 25 | |
| 35 | A1 | 18 | 220 | 12 | 22 | 195 | 12 | 22 | 192 | 14 | 28 | |
| 36 | A1 | 0 | 239 | 10 | 0 | 228 | 10 | 0 | 202 | 11 | 37 | |
| 37 | A1 | 0 | 255 | 20 | 0 | 240 | 20 | 0 | 221 | 20 | 34 | |

32

EP 3 872 205 A1

(continued)

| Test No. | Steel No. | Electric resistance welded portion | | | | | | | | | Difference in hardness [outer surface portion S - 1/2ts portion] (HV10) | Note |
| --- | --- | --- | --- | --- | --- | --- | --- | --- | --- | --- | --- | --- |
| | | Outer surface layer portion S | | | $1/4t_s$ portion | | | $1/2ts$ portion | | | | |
| | | PF fraction (%) | Hardness (HV10) | Average crystal grain size (μm) | PF fraction (%) | Hardness (HV10) | Average crystal grain size (μm) | PF fraction (%) | Hardness (HV10) | Average crystal grain size (μm) | | |
| 38 | A1 | 0 | 215 | 12 | 0 | 210 | 12 | 0 | 210 | 12 | 5 | Examples |
| 39 | A1 | 0 | 210 | 13 | 0 | 205 | 12 | 0 | 205 | 12 | 5 | |
| 40 | A2 | 0 | 250 | 15 | 30 | 190 | 15 | 30 | 188 | 14 | <u>62</u> | Comparative Examples |
| 41 | <u>B14</u> | 70 | 150 | 10 | 80 | 145 | 10 | <u>80</u> | 145 | 14 | 5 | |
| 42 | <u>B15</u> | 0 | 270 | <u>22</u> | 0 | 260 | <u>22</u> | 0 | 255 | <u>23</u> | 15 | |
| 43 | <u>B16</u> | <u>70</u> | 150 | 10 | <u>80</u> | 145 | 10 | <u>80</u> | 145 | 14 | 5 | |
| 44 | A1 | 0 | 240 | 20 | 0 | 235 | 20 | 0 | 230 | 20 | 10 | Reference Example |

EP 3 872 205 A1

[Table 6]

| Test No. | Steel No. | Outer diameter of electric resistance welded steel pipe (mm) | Thickness of base metal portion $t_B$ (mm) | Thickness of electric resistance welded portion $t_s$ (mm) | TS (MPa) | YS (MPa) | Low temperature toughness (Base metal portion) DWTT percent ductile fracture (%) | Low temperature toughness (Electric resistance welded portion) CTOD value (mm) | Note |
|---|---|---|---|---|---|---|---|---|---|
| 1 | A1 | 355.6 | 17 | 17 | 585 | 525 | 90 | 0.40 | Examples |
| 2 | A2 | 304.8 | 20 | 20 | 560 | 515 | 85 | 0.30 | |
| 3 | A3 | 406.4 | 23 | 23 | 548 | 508 | 85 | 0.25 | |
| 4 | A4 | 457.2 | 18 | 18 | 583 | 519 | 85 | 0.20 | |
| 5 | A5 | 609.6 | 24 | 24 | 599 | 538 | 100 | 0.30 | |
| 6 | A6 | 457.2 | 20 | 20 | 569 | 524 | 90 | 0.30 | |
| 7 | A7 | 457.2 | 19 | 19 | 591 | 533 | 90 | 0.40 | |
| 8 | A8 | 508.0 | 15 | 15 | 547 | 502 | 88 | 0.50 | |
| 9 | A9 | 355.6 | 17 | 17 | 605 | 546 | 90 | 0.30 | |
| 10 | A10 | 406.4 | 23 | 23 | 566 | 512 | 88 | 0.20 | |
| 11 | A11 | 355.6 | 21 | 21 | 569 | 510 | 88 | 0.30 | |
| 12 | A12 | 304.8 | 20 | 20 | 561 | 508 | 88 | 0.30 | |
| 13 | A13 | 457.2 | 17 | 17 | 563 | 515 | 90 | 0.40 | |
| 14 | A14 | 508.0 | 21 | 21 | 565 | 508 | 90 | 0.50 | |
| 15 | A15 | 355.6 | 22 | 22 | 562 | 519 | 90 | 0.40 | |
| 16 | A16 | 406.4 | 20 | 20 | 613 | 538 | 90 | 0.20 | |
| 17 | A17 | 304.8 | 19 | 19 | 625 | 535 | 85 | 0.20 | |
| 18 | B1 | 355.6 | 15 | 15 | 451 | 402 | 90 | 0.20 | |
| 19 | B2 | 457.2 | 19 | 19 | 695 | 621 | 60 | 0.03 | |
| 20 | B3 | 406.4 | 20 | 20 | 546 | 502 | 85 | 0.01 | |
| 21 | B4 | 508.0 | 24 | 24 | 448 | 412 | 90 | 0.20 | |

EP 3 872 205 A1

34

(continued)

| Test No. | Steel No. | Outer diameter of electric resistance welded steel pipe (mm) | Thickness of base metal portion $t_B$ (mm) | Thickness of electric resistance welded portion $t_s$ (mm) | TS (MPa) | YS (MPa) | Low temperature toughness (Base metal portion) DWTT percent ductile fracture (%) | Low temperature toughness (Electric resistance welded portion) CTOD value (mm) | Note |
|---|---|---|---|---|---|---|---|---|---|
| 22 | B5 | 355.6 | 19 | 19 | 695 | 618 | 65 | 0.03 | Comparative Examples |
| 23 | B6 | 304.8 | 16 | 16 | 546 | 502 | 85 | 0.01 | |
| 24 | A1 | 508.0 | 20 | 20 | 597 | 541 | 70 | 0.20 | |
| 25 | B7 | 508.0 | 20 | 20 | 570 | 507 | 65 | 0.20 | |
| 26 | B8 | 457.2 | 22 | 22 | 569 | 524 | 45 | 0.03 | |
| 27 | B9 | 304.8 | 17 | 17 | 572 | 512 | 35 | 0.02 | |
| 28 | B10 | 355.6 | 18 | 18 | 569 | 514 | 50 | 0.01 | |
| 29 | B11 | 609.6 | 19 | 19 | 546 | 502 | 65 | 0.01 | |
| 30 | B12 | 406.4 | 20 | 20 | 601 | 538 | 70 | 0.03 | |
| 31 | B13 | 457.2 | 19 | 19 | 569 | 517 | 75 | 0.01 | |
| 32 | A1 | 355.6 | 16 | 16 | 457 | 410 | 85 | 0.20 | Examples |
| 33 | A1 | 355.6 | 18 | 18 | 565 | 512 | 70 | 0.20 | |
| 34 | A1 | 355.6 | 20 | 20 | 460 | 409 | 75 | 0.10 | |
| 35 | A1 | 355.6 | 20 | 20 | 703 | 630 | 75 | 0.20 | |
| 36 | A1 | 355.6 | 24 | 24 | 515 | 477 | 85 | 0.05 | |
| 37 | A1 | 355.6 | 21 | 21 | 513 | 479 | 85 | 0.06 | |
| 38 | A1 | 355.6 | 17 | 17 | 505 | 490 | 95 | 0.50 | |
| 39 | A1 | 355.6 | 17 | 17 | 515 | 500 | 95 | 0.60 | |

(continued)

| Test No. | Steel No. | Outer diameter of electric resistance welded steel pipe (mm) | Thickness of base metal portion $t_B$ (mm) | Thickness of electric resistance welded portion $t_s$ (mm) | TS (MPa) | YS (MPa) | Low temperature toughness (Base metal portion) DWTT percent ductile fracture (%) | Low temperature toughness (Electric resistance welded portion) CTOD value (mm) | Note |
|---|---|---|---|---|---|---|---|---|---|
| 40 | A2 | 304.8 | 20 | 20 | 560 | 515 | 85 | 0.06 | Comparative Examples |
| 41 | B14 | 304.8 | 20 | 20 | 445 | 396 | 85 | 0.20 | |
| 42 | B15 | 304.8 | 20 | 20 | 840 | 781 | 60 | 0.10 | |
| 43 | B16 | 304.8 | 20 | 20 | 450 | 401 | 85 | 0.20 | |
| 44 | A1 | 355.6 | 10 | 10 | 570 | 513 | 85 | 0.20 | Reference Example |

As shown in Table 1 to Table 6, the electric resistance welded steel pipes of the Examples (Test No. 1 to No. 17, No. 38 and No. 39) in which:

the base metal portion has the chemical composition in the present disclosure;
the PF fraction in the metallographic microstructure of each of the outer surface portion B, the $1/4t_B$ portion and $1/2t_B$ portion is from 0 to 50%; and the average crystal grain size in the outer surface layer portion B, the $1/4t_B$ portion and the $1/2t_B$ portion is 20 $\mu$m or less;
the difference in hardness [outer surface portion B - $1/2t_B$ portion] is from 0 HV10 to 30 HV10;
the PF fraction in the outer surface portion S is from 0 to 30%; and the average crystal grain size in the outer surface portion S is from 20 $\mu$m or less;
the PF fraction in the $1/4t_S$ portion is from 0 to 40%; and the average crystal grain size in the $1/4t_S$ portion is 20 $\mu$m or less;
the PF fraction in the $1/2t_S$ portion is from 0 to 50%; and the average crystal grain size in the $1/2t_S$ portion is 20 $\mu$m or less;
the difference in hardness [outer surface portion S - $1/2t_S$ portion] is from 0 HV10 to 30 HV10;
each of the $t_B$ and the $t_S$ is 15 mm or more;
the TS is from 500 MPa to 700 MPa; and
the YS is from 410 MPa to 560 MPa;

showed an excellent low temperature toughness of the base metal portion (DWTT percent ductile fracture) and an excellent low temperature toughness of the electric resistance welded portion (CTOD value).

In contrast to these Examples, the results of the Comparative Examples (Test No. 18 to No. 37, and No. 40 to No.43) were as follows.

In the electric resistance welded steel pipe of Test No. 18, in which the C content is too low, the PF fractions in the base metal portion and the electric resistance welded portion were excessively increased, resulting in insufficient strengths (TS and YS) of the electric resistance welded steel pipe.

In the electric resistance welded steel pipe of Test No. 19, in which the C content is too high, the YS of the electric resistance welded steel pipe was excessively increased, and the low temperature toughness of the base metal portion (DWTT percent ductile fracture) and the low temperature toughness of the electric resistance welded portion (CTOD value) were deteriorated.

In the electric resistance welded steel pipe of Test No. 20, in which the Si content is too high, the low temperature toughness of the electric resistance welded portion (CTOD value) was deteriorated.

In the electric resistance welded steel pipe of Test No. 21, in which the Mn content is too low, the PF fractions in the base metal portion and the electric resistance welded portion were excessively increased, resulting in an insufficient TS of the electric resistance welded steel pipe.

In the electric resistance welded steel pipe of Test No. 22, in which the Mn content is too high, the YS of the electric resistance welded steel pipe was excessively increased, and the low temperature toughness of the base metal portion (DWTT percent ductile fracture) and the low temperature toughness of the electric resistance welded portion (CTOD value) were deteriorated.

In the electric resistance welded steel pipe of Test No. 23, in which the A1 content is too high, the low temperature toughness of the electric resistance welded portion (CTOD value) was deteriorated.

In the electric resistance welded steel pipe of Test No. 24, in which the base metal portion has the chemical composition in the present disclosure, but the slab heating temperature is too high, the average crystal grain size in the outer surface layer portion B, the $1/4t_B$ portion and the $1/2t_B$ portion was excessively increased, and the low temperature toughness of the base metal portion (DWTT percent ductile fracture) was deteriorated.

In the electric resistance welded steel pipe of Test No. 25, in which the Ti content is too low, the average crystal grain size in the outer surface layer portion B, the $1/4t_B$ portion and the $1/2t_B$ portion was excessively increased, and the low temperature toughness of the base metal portion (DWTT percent ductile fracture) was deteriorated.

In the electric resistance welded steel pipe of Test No. 26, in which the Ti content is too high, the low temperature toughness of the base metal portion (DWTT percent ductile fracture) and the low temperature toughness of the electric resistance welded portion (CTOD value) were deteriorated.

In the electric resistance welded steel pipe of Test No. 27, in which the O content is too high, the low temperature toughness of the base metal portion (DWTT percent ductile fracture) and the low temperature toughness of the electric resistance welded portion (CTOD value) were deteriorated.

In the electric resistance welded steel pipe of Test No. 28, in which the S content is too high, the low temperature toughness of the base metal portion (DWTT percent ductile fracture) and the low temperature toughness of the electric resistance welded portion (CTOD value) were deteriorated.

In the electric resistance welded steel pipe of Test No. 29, in which the P content is too high, the low temperature toughness of the base metal portion (DWTT percent ductile fracture) and the low temperature toughness of the electric resistance welded portion (CTOD value) were deteriorated.

In the electric resistance welded steel pipe of Test No. 30, in which the Nb content is too high, the low temperature toughness of the base metal portion (DWTT percent ductile fracture) and the low temperature toughness of the electric resistance welded portion (CTOD value) were deteriorated.

In the electric resistance welded steel pipe of Test No. 31, in which the Nb content is too low and the Ca content is too high, the low temperature toughness of the base metal portion (DWTT percent ductile fracture) and the low temperature toughness of the electric resistance welded portion (CTOD value) were deteriorated.

In the electric resistance welded steel pipe of Test No. 32, in which the base metal portion has the chemical composition in the present disclosure, but the slab heating temperature and the finish rolling finishing temperature are too low, the PF fractions in the base metal portion were excessively increased, resulting in an insufficient the electric resistance welded steel pipe.

In the electric resistance welded steel pipe of Test No. 33, in which the base metal portion has the chemical composition in the present disclosure, but the rolling reduction ratio in the non-recrystallization region is too low, the average crystal grain size in the outer surface layer portion B, the $1/4t_B$ portion and the $1/2t_B$ portion was excessively increased, and the low temperature toughness of the base metal portion (DWTT percent ductile fracture) was deteriorated.

In the electric resistance welded steel pipe of Test No. 34, in which the base metal portion has the chemical composition in the present disclosure, but the finish rolling finishing temperature is too low, the electric resistance welded steel pipe had insufficient TS and YS, and the low temperature toughness of the base metal portion (DWTT percent ductile fracture) and the low temperature toughness of the electric resistance welded portion (CTOD value) were deteriorated.

In the electric resistance welded steel pipe of Test No. 35, in which the base metal portion has the chemical composition in the present disclosure, but the coiling temperature is too low, the average crystal grain size in the outer surface layer portion B, the $1/4t_B$ portion and the $1/2t_B$ portion was excessively increased, and the low temperature toughness of the base metal portion (DWTT percent ductile fracture) was deteriorated.

In the electric resistance welded steel pipe of Test No. 36, in which the base metal portion has the chemical composition in the present disclosure, but the heating temperature S in the seam heat treatment is too high, the difference in hardness [outer surface portion S - $1/2t_S$ portion] was excessively increased, and the low temperature toughness (CTOD value) of the electric resistance welded portion was deteriorated. The reason for this is thought to be because a martensite transformation occurred in the outer surface portion S, resulting in too high a hardness of the outer surface portion S.

In the electric resistance welded steel pipe of Test No. 37, in which the base metal portion has the chemical composition in the present disclosure, but the first cooling stop temperature in the seam heat treatment is too low, the difference in hardness [outer surface portion S - $1/2t_S$ portion] was excessively increased, and the low temperature toughness (CTOD value) of the electric resistance welded portion was deteriorated. The reason for this is thought to be because the martensite transformation occurred in the outer surface portion S, resulting in too high a hardness of the outer surface portion S.

In the electric resistance welded steel pipe of Test No. 40, in which the base metal portion has the chemical composition in the present disclosure, but the first cooling rate in the seam heat treatment is too high, the difference in hardness [outer surface portion S - $1/2t_S$ portion] was excessively increased, and the low temperature toughness (CTOD value) of the electric resistance welded portion was deteriorated.

In the electric resistance welded steel pipe of Test No. 41, in which the value of Ceq in the chemical composition of the base metal portion is less than 0.20, the PF fractions in the base metal portion and the electric resistance welded portion were excessively increased, resulting in insufficient strengths (TS and YS) of the electric resistance welded steel pipe.

In the electric resistance welded steel pipe of Test No. 42, in which the value of Ceq in the chemical composition of the base metal portion is more than 0.53, the strengths (TS and YS) of the electric resistance welded steel pipe were excessively increased, and the low temperature toughness of the base metal portion (DWTT percent ductile fracture) and the low temperature toughness of the electric resistance welded portion (CTOD value) were deteriorated.

In the electric resistance welded steel pipe of Test No. 43, in which the value of Pcm in the chemical composition of the base metal portion is less than 0.15, the PF fractions in the base metal portion and the electric resistance welded portion were excessively increased, resulting in insufficient strengths (TS and YS) of the electric resistance welded steel pipe.

Further, in the electric resistance welded steel pipe of Test No. 44 (Reference Example), in which the thicknesses (namely, $t_B$ and ts) are smaller as compared to those of the electric resistance welded steel pipes of Test No. 36, No. 37 and No. 40 (all of which are Comparative Examples), not much difference in hardness [outer surface portion S - $1/2t_S$ portion] occurred, and the low temperature toughness (CTOD value) of the electric resistance welded portion was at a level which does not cause any problem.

**Claims**

1. An electric resistance welded steel pipe for a linepipe, the steel pipe comprising:

a base metal portion and an electric resistance welded portion,
wherein the base metal portion has a chemical composition consisting of, in terms of % by mass:

from 0.04 to 0.12% of C,
from 0.01 to 0.50% of Si,
from 0.5 to 2.0% of Mn,
from 0 to 0.020% of P,
from 0 to 0.0030% of S,
from 0 to 0.080% of Al,
from 0.005 to 0.030% of Ti,
from 0.005 to 0.050% of Nb,
from 0.001 to 0.008% of N,
from 0 to 0.003% of O,
from 0 to 0.5% of Cu,
from 0 to 0.5% of Ni,
from 0 to 0.50% of Cr,
from 0 to 0.5% of Mo,
from 0 to 0.10% of V,
from 0 to 0.0020% of B,
from 0 to 0.500% of W,
from 0 to 0.0500% of Zr,
from 0 to 0.0500% of Ta,
from 0 to 0.005% of Mg,
from 0 to 0.0050% of Ca,
from 0 to 0.0050% of REM,
from 0 to 0.0050% of Y,
from 0 to 0.0050% of Hf,
from 0 to 0.0050% of Re, and
a balance consisting of Fe and impurities,
wherein Ceq, represented by the following Formula (i), is from 0.20 to 0.53, and Pcm,
represented by the following Formula (ii), is from 0.150 to 0.250:

$$Ceq = C + Mn/6 + (Ni + Cu)/15 + (Cr + Mo + V)/5 \qquad (i)$$

$$Pcm = C + Si/30 + (Mn + Cu + Cr)/20 + Ni/60 + Mo/15 + V/10 + 5 \times B \qquad (ii)$$

wherein, in Formulae (i) and (ii), each element symbol represents a content of each element in % by mass;

wherein, in a case in which a thickness of the base metal portion is defined as $t_B$, and a thickness of the electric resistance welded portion is defined as ts,

a metallographic microstructure of each of an outer surface layer portion B that is located at a position at a depth of 1 mm from an outer surface of the base metal portion, a $1/4t_B$ portion that is located at a position at a depth of $1/4t_B$ from the outer surface of the base metal portion, and a $1/2t_B$ portion that is located at a position at a depth of $1/2t_B$ from the outer surface of the base metal portion, has a polygonal ferrite fraction of from 0 to 50%, and an average crystal grain size in the outer surface layer portion B, the $1/4t_B$ portion and the $1/2t_B$ portion is 20 $\mu$m or less;
a value obtained by subtracting a hardness of the $1/2t_B$ portion from a hardness of the outer surface layer portion B is from 0 HV10 to 30 HV10;
a metallographic microstructure of an outer surface layer portion S that is located at a position at a depth of 1 mm from an outer surface of the electric resistance welded portion has a polygonal ferrite fraction of from 0 to 30%, and an average crystal grain size in the outer surface layer portion S is 20 $\mu$m or less;

a metallographic microstructure of a $1/4t_S$ portion that is located at a position at a depth of $1/4t_S$ from the outer surface of the electric resistance welded portion has a polygonal ferrite fraction of from 0 to 40%, and an average crystal grain size in the $1/4t_S$ portion is 20 μm or less;

a metallographic microstructure of a $1/2t_S$ portion that is located at a position at a depth of $1/2t_S$ from the outer surface of the electric resistance welded portion has a polygonal ferrite fraction of from 0 to 50%, and an average crystal grain size in the $1/2t_S$ portion is 20 μm or less;

a value obtained by subtracting a hardness of the $1/2t_S$ portion from a hardness of the outer surface layer portion S is from 0 HV10 to 30 HV10; and

each of the $t_B$ and the $t_S$ is 15 mm or more;

wherein the electric resistance welded steel pipe has a tensile strength of from 500 MPa to 700 MPa; and

wherein the electric resistance welded steel pipe has a yield strength of from 410 MPa to 560 MPa.

2. The electric resistance welded steel pipe for a linepipe according to claim 1, wherein a chemical composition of the base metal portion comprises, in terms of % by mass, at least one selected from the group consisting of:

more than 0% but equal to or less than 0.5% of Cu,
more than 0% but equal to or less than 0.5% of Ni,
more than 0% but equal to or less than 0.50% of Cr,
more than 0% but equal to or less than 0.5% of Mo,
more than 0% but equal to or less than 0.10% of V,
more than 0% but equal to or less than 0.002% of B,
more than 0% but equal to or less than 0.500% of W,
more than 0% but equal to or less than 0.0500% of Zr,
more than 0% but equal to or less than 0.0500% of Ta,
more than 0% but equal to or less than 0.005% of Mg,
more than 0% but equal to or less than 0.0050% of Ca,
more than 0% but equal to or less than 0.0050% of REM,
more than 0% but equal to or less than 0.0050% of Y,
more than 0% but equal to or less than 0.0050% of Hf, and
more than 0% but equal to or less than 0.0050% of Re.

3. The electric resistance welded steel pipe for a linepipe according to claim 1 or 2, wherein each of the $t_B$ and the $t_S$ is from 15 mm to 30 mm.

4. The electric resistance welded steel pipe for a linepipe according to any one of claims 1 to 3, wherein the electric resistance welded steel pipe has an outer diameter of from 304.8 mm to 609.6 mm.

FIG.1

EP 3 872 205 A1

## FIG.2

42

## INTERNATIONAL SEARCH REPORT

International application No.

PCT/JP2019/006104

### A. CLASSIFICATION OF SUBJECT MATTER
Int. Cl. C22C38/00(2006.01)i, C22C38/58(2006.01)i, C21D9/08(2006.01)n

According to International Patent Classification (IPC) or to both national classification and IPC

### B. FIELDS SEARCHED
Minimum documentation searched (classification system followed by classification symbols)
Int. Cl. C22C38/00-38/60, C21D9/08

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2001-207220 A (KAWASAKI STEEL CORP.) 31 July 2001 (Family: none) | 1-4 |
| A | JP 2003-293089 A (NIPPON STEEL CORP.) 15 October 2003, & US 2003/0217795 A1 & EP 1354973 A1 & KR 10-0558429 B1 | 1-4 |
| A | JP 2007-138289 A (JFE STEEL CORPORATION) 07 June 2007 (Family: none) | 1-4 |
| A | WO 2010/087511 A1 (JFE STEEL CORPORATION) 05 August 2010, & US 2011/0284137 A1 & US 2014/0144552 A1 & EP 2392682 A1 & KR 10-2011-0102483 A & CN 102301026 A | 1-4 |

☒  Further documents are listed in the continuation of Box C.          ☐     See patent family annex.

| | |
|---|---|
| * Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>10.05.2019 | Date of mailing of the international search report<br>21.05.2019 |
|---|---|
| Name and mailing address of the ISA/<br>     Japan Patent Office<br>     3-4-3, Kasumigaseki, Chiyoda-ku,<br>     Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/006104 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2013/145770 A1 (JFE STEEL CORPORATION) 03 October 2013, & US 2015/0059912 A1 & EP 2832889 A1 & CN 104220624 A & KR 10-2014-0138932 A | 1-4 |
| A | WO 2013/145771 A1 (JFE STEEL CORPORATION) 03 October 2013, & US 2015/0090370 A1 & EP 2832890 A1 & CN 104220623 A & KR 10-2014-0138933 A | 1-4 |
| A | WO 2015/079661 A1 (JFE STEEL CORPORATION) 04 June 2015, & US 2016/0289788 A1 & EP 3040439 A1 & CN 105793458 A & KR 10-2016-0090363 A | 1-4 |
| A | WO 2018/186274 A1 (JFE STEEL CORPORATION) 11 October 2018 (Family: none) | 1-4 |
| A | US 2007/0267110 A1 (STEVEN S. HANSEN et al.) 22 November 2007, & CA 2550680 A1 | 1-4 |

Form PCT/ISA/210 (continuation of second sheet) (January 2015)

**EP 3 872 205 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007138289 A

- JP 2007138290 A

**Non-patent literature cited in the description**

- Collection of Photographs of Steel Bainite 1. Iron and Steel Institute of Japan, 1992